# FASCICULE DE BREVET EUROPEEN

(11) **EP 3 620 928 B1**
(45) Date de publication et mention de la délivrance du brevet: **23.04.2025**
(21) Numéro de dépôt: 19306076.1
(22) Date de dépôt: 06.09.2019
(51) Int. Cl.: G06F 11/34, G06F 11/07

(54) **DISPOSITIF ET PROCEDE D ANALYSE DU COMPORTEMENT D'UNE BRIQUE APPLICATIVE SOUMISE A UNE RAREFACTION DES RESSOURCES**
VORRICHTUNG UND VERFAHREN ZUR ANLAYSE DES VERHALTENS EINES ANWENDUNGSBAUSTEINS, DER EINER RESSOURCENVERKNAPPUNG AUSGESETZT IST
DEVICE AND METHOD FOR ANALYSING THE BEHAVIOUR OF AN APPLICATION COMPONENT SUBJECT TO INCREASING SCARCITY OF RESOURCES

(30) Priorité: 07.09.2018 FR 1858072
(43) Date de publication de la demande: 11.03.2020
(73) Titulaire: BULL SAS, 78340 Les Clayes-sous-Bois (FR)
(72) Inventeur: DEMEILLIEZ, Bruno, 38380 Saint Laurent du Pont (FR); ALVAREZ MARCOS, Jose Ignacio, 69220 Saint Jean d'Ardières (FR); GERMAIN, Christophe, 38100 Grenoble (FR)
(74) Mandataire: Cabinet Camus Lebkiri

(56) Documents cités:
- EP-A1- 3 106 989
- EP-A1- 3 163 445
- US-A1- 2009 271 152
- US-A1- 2012 185 735

## Description

La présente invention concerne le domaine de la surveillance des performances des infrastructures informatiques et particulièrement celui de la résilience des applications. Plus particulièrement, l'invention porte sur un dispositif et un procédé d'analyse d'une brique applicative soumise à une raréfaction des ressources pour en améliorer la résilience.

### [Art antérieur]

Dans le domaine de la surveillance des performances des infrastructures informatiques, la gestion de la performance et de la disponibilité des applications logicielles tient une place essentielle. Ainsi, un administrateur du système d'information (SI) s'efforce de mettre en place les outils permettant de détecter, de diagnostiquer et de corriger les problèmes de performance des applications pour maintenir un niveau de service attendu notamment malgré la survenue de défaillances matérielles ou logicielles. En effet, certaines applications constituent des pierres angulaires de l'activité d'une société et un haut niveau de résilience est donc exigé.

La résilience d'une application ou d'une chaine applicative est sa capacité à offrir le meilleur service possible malgré la survenue d'un problème sur l'un de ses composants. La résilience devient de plus en plus importante au fur et à mesure que les entreprises continuent à implémenter des applications dont le maintien en activité est critique pour elles et pour lesquelles une interruption de service n'est pas envisageable. Ainsi, la résilience est un terme très large qui inclut notamment la tolérance aux pannes, la haute disponibilité et la capacité à la reprise après une défaillance. Une résilience élevée permet de réduire les conséquences négatives des défaillances.

Il existe des méthodes connues permettant de tester la résilience d'une application et d'étudier les causes d'une défaillance. Par exemple, comme illustré dans le document US2012185735, il existe de nombreuses solutions techniques permettant de surveiller le comportement des applications (monitoring), d'étudier le comportement des applications (profiling) ou d'avoir des informations associées au crash d'une application (dump). Ensuite, il existe des méthodes de test de résilience d'une application comportant la réception d'un script de test qui spécifie un scénario de défaillance dans une application. Le scénario de défaillance spécifié est traduit en règles d'injection de fautes utilisées pour mettre en scène une panne spécifique.

Néanmoins, il n'existe pas de solution satisfaisante dédiée à l'étude et à l'amélioration de la résilience d'une application faisant face à une raréfaction de ressources. Par exemple, EP3106989 décrit une solution simulant une raréfaction de ressources en appliquant une charge parasite. Dans cette solution, l'application est soumise à une raréfaction indiscriminée de toutes les ressources sans considérer les ressources critiques.

Pourtant, lorsqu'une application s'exécute dans un système informatique, qu'il s'agisse d'un système centralisé ou distribué, les performances de l'application dépendent au moins en partie de la quantité de ressources informatiques disponibles. Ainsi, il peut survenir des défaillances lorsque les ressources disponibles sont saturées. Or, les applications informatiques connaissent d'importantes variations dans leur niveau d'utilisation pouvant entrainer une réduction des ressources informatiques disponibles. Cette utilisation peut varier dans la journée (i.e. plages horaires de travail par rapport au reste de la journée), dans la semaine (i.e. samedi, dimanche par rapport aux autres jours de semaine) dans le mois et l'année (e.g. période de clôture mensuelle, trimestrielle, annuelle, etc.). Par exemple, lorsqu'une application est en production, elle peut connaitre des évolutions importantes d'utilisation (i.e charge) dans le temps, causées par une évolution du nombre d'utilisateurs et/ou de la nature de leurs activités.

De nos jours, les ressources sont de plus en plus partagées entre les différentes applications du SI d'une entreprise. Les applications peuvent donc rencontrer de plus en plus souvent des problèmes de saturation de ressources. En effet, la défaillance d'une application pour cause de saturation des ressources disponibles peut intervenir lors d'un pic de charge sur ladite application, mais également lors d'un pic de charge sur une application tierce utilisant les mêmes ressources ou lors d'un dysfonctionnement sur un composant de l'infrastructure informatique entrainant une réduction des ressources disponibles. Ainsi, le problème de la résilience face aux saturations des ressources est aggravé dans les environnements mutualisés ou virtualisés où la saturation d'une ressource par une première application peut entraîner l'échec d'une tâche d'une seconde application et nécessiter sa réexécution complète.

Habituellement, pour palier à ces difficultés, les administrateurs de SI vont augmenter les ressources disponibles éventuellement en fonction de test de charge consistant en une simulation de l'augmentation de la charge des applications. Sur cette base, au fil du temps, les administrateurs de SI font généralement évoluer leur infrastructure informatique de façon à toujours proposer des services applicatifs métiers performants et adaptés à la demande de leur organisation.

Néanmoins, ces tests sont généralement basés sur une augmentation de la charge et non sur le comportement de la chaine applicative face à une saturation des ressources. Or, une application ne réagira pas de la même façon face à une augmentation de sa charge et face à une réduction des ressources disponibles pour son fonctionnement.

Ainsi, il existe un besoin pour des méthodes et dispositifs permettant de rendre les applications plus résilientes face aux saturations des ressources disponibles. Une application résiliente sera capable malgré la perte d'une partie des ressources disponibles de continuer à fonctionner tout en assurant des niveaux de service souhaités ou bien à fonctionner dans un mode dégradé où seulement les services critiques sont maintenus à des niveaux de service acceptables.

### [Problème technique]

L'invention a donc pour but de remédier aux inconvénients de l'art antérieur. En particulier, l'invention a pour but de proposer un dispositif d'analyse du comportement d'une brique applicative soumise à une raréfaction des ressources, ledit dispositif permettant de suivre le comportement de la brique applicative et de diagnostiquer la nature et/ou la source d'une éventuelle défaillance causée par la raréfaction de ressources. Selon un mode de réalisation, ce dispositif peut notamment être utilisé pour améliorer la résilience d'une brique applicative face à une raréfaction des ressources.

L'invention a en outre pour but de proposer un procédé d'analyse du comportement d'une brique applicative soumise à une raréfaction des ressources, ledit procédé pouvant selon un mode de réalisation permettre de rendre les applications plus résilientes face aux saturations des ressources disponibles.

### [Brève description de l'invention)

A cet effet, l'invention porte sur un dispositif d'analyse du comportement d'une brique applicative soumise à une raréfaction des ressources dans une infrastructure informatique selon la revendication 1.

Un tel dispositif peut être utilisé pour simuler la saturation d'une ou plusieurs ressources et pour analyser le comportement des applications utilisant ces ressources afin de les rendre plus résilientes aux différentes saturations pouvant se produire en production. En effet, pour chaque ressource critique, il est possible d'utiliser le module de raréfaction de ressources pour simuler progressivement la raréfaction de la ressource tout en maintenant le niveau de charge de l'application (i.e. brique applicative) à qualifier. La raréfaction de la ressource est de préférence progressive jusqu'à provoquer une défaillance de l'application puis le module de gestion de performance applicative permet de déterminer la source et/ou la nature de la défaillance. Le dispositif selon l'invention peut fournir à un administrateur SI la source et la nature des défaillances de la brique applicative suite à une raréfaction de ressource. Ainsi, l'administrateur SI pourra prendre les mesures correctives adéquates. Cela peut être lié à des problématiques de configuration système tout comme à des problèmes de configuration applicative voire à des problèmes de conception de la brique applicative. La brique applicative résiliente sera alors capable malgré la perte d'une partie des ressources disponibles de continuer à fonctionner tout en assurant des niveaux de service souhaités ou bien à fonctionner dans un mode dégradé où seulement les services critiques sont maintenus à des niveaux de service acceptables.

Une fois les adaptations réalisées, le dispositif selon l'invention peut être utilisé pour refaire la simulation de façon à valider que les adaptations permettent bien à la brique applicative d'être résiliente à la raréfaction de la ressource. Si tel est le cas, le dispositif peut être utilisé pour poursuivre la raréfaction de ladite ressource pour valider la résilience de la brique applicative au-delà du point de défaillance trouvé précédemment ou bien tester la résilience de la brique applicative sur un autre type de ressources.

**Selon d'autres caractéristiques optionnelles du dispositif :**
- les données de défaillances générées comportent une donnée sur un niveau de raréfaction de ressources que la brique applicative peut supporter avant de subir une défaillance. Ainsi, l'administrateur SI sera informé de la résilience de la brique applicative concernée et des défaillances qu'elle est apte à supporter.
- le module de gestion de performance applicative est configuré pour sélectionner la nature de la défaillance parmi :
   - configuration matérielle de l'infrastructure informatique,
   - configuration logicielle de l'infrastructure informatique,
   - configuration de la brique applicative, et
   - conception de la brique applicative.
- il comporte en outre un référentiel de connaissances configuré pour mémoriser des données prédéterminées de défaillances en fonction de données d'exécution, le module de gestion de performance applicative comporte des collecteurs de traces par exemple déployés sur des processus impliqués dans l'exécution de la brique applicative, lesdits collecteurs de traces étant configurés pour collecter des données d'exécution et le module de gestion de performance applicative est configuré pour générer les données de défaillances à partir du référentiel de connaissances en fonction de données d'exécution collectées.
- il comporte en outre un référentiel de règles d'évolution configuré pour mémoriser des actions correctives en fonction de données de défaillance et un module d'amélioration de la résilience configuré pour identifier des actions correctives à partir de données de défaillances générées par le module de gestion de performance applicative. Cela permet notamment, de façon rapide et automatique, de générer des propositions de modification permettant d'augmenter la résilience de la brique applicative à la saturation de ressources.
- le référentiel de règles d'exécution est configuré pour mémoriser plusieurs catégories de seuils prédéterminés de paramètre de qualité de service incluant une catégorie dite acceptable, correspondant aux niveaux de services au-delà desquels la brique applicative est considérée comme fournissant un service dégradé mais acceptable et en ce que le module d'amélioration de la résilience est configuré pour mettre en œuvre lesdites actions correctives de façon à ce que la brique applicative fournisse des niveaux de service correspondant à la catégorie dite acceptable malgré une raréfaction de ressources. Ainsi, une brique applicative résiliente sera capable malgré la perte d'une partie des ressources disponibles de continuer à fonctionner tout en assurant des niveaux de service souhaités ou bien à fonctionner dans un mode dégradé où seulement les services critiques sont maintenus à des niveaux de service acceptables.
- le module d'amélioration de la résilience est configuré pour mettre en œuvre lesdites actions correctives ou à vérifier leur mise en œuvre pour permettre à l'application d'être résiliente à une raréfaction de ressources. Ainsi, l'invention permet de faciliter les modifications de la brique applicative, ou de l'infrastructure informatique l'hébergeant, entrainant une augmentation de la résilience de la brique applicative face aux saturations de ressources.
- il comporte en outre un référentiel de ressources accessibles configuré pour mémoriser des données caractéristiques de ressources accessibles et un module d'évolution d'infrastructure configuré pour générer au moins un plan d'évolution listant des modifications de ressources à effectuer dans l'infrastructure informatique à partir des données caractéristiques de ressources accessibles et des données de défaillances.
- les règles de consommation des ressources critiques comportent au moins les données suivantes :
   - un niveau de consommation de ressource de départ,
   - un niveau final de consommation de ressource,
   - un pas d'augmentation de la consommation, et
   - une durée entre chaque pas d'augmentation.

L'invention porte en outre sur un procédé d'analyse du comportement d'une brique applicative soumise à une raréfaction des ressources dans une infrastructure informatique selon la revendication 10.

Le procédé selon l'invention permet de façon automatisée, de réalisation permettre de rendre une brique applicative plus résiliente face aux saturations des ressources disponibles. En outre, il peut comporter une étape de sélection d'au moins une instruction d'action corrective si une défaillance est identifiée et une étape d'application de l'action corrective identifiée.

De préférence, le procédé selon l'invention peut comporter au moins une, de façon plus préférée au moins deux des étapes suivantes :
- une étape d'analyse de l'implication de la conception de la brique applicative dans la défaillance suite à une raréfaction d'une ressource critique,
- une étape d'analyse de l'implication de la configuration de la brique applicative dans la défaillance, et
- une étape d'analyse de l'implication des ressources de l'infrastructure informatique dans la défaillance.

Ainsi, le procédé pourra de façon automatisée déterminer l'origine d'une défaillance et éventuellement comporter une étape d'application d'une action corrective identifiée.

**Selon d'autres caractéristiques optionnelles du procédé :**
- lorsqu'il est déterminé que la conception de la brique applicative est impliquée dans la défaillance, alors le procédé comporte une étape de génération d'un rapport comportant des données de traces collectées puis une étape de détermination de l'existence ou non d'autres ressources critiques à tester pour cette brique applicative.
- lorsqu'il y a détermination de l'existence d'autres ressources critiques à tester pour cette brique applicative, alors le procédé comporte en outre une modification de la ressource critique à raréfier et sinon l'analyse du comportement de cette brique applicative est finalisée et un rapport est généré.
- lorsqu'il est déterminé que la configuration de la brique applicative est impliquée dans la défaillance, alors le procédé comporte une étape de génération d'un rapport comportant une donnée sur la configuration défaillante de la brique applicative et une étape de modification de fichiers de configuration de la brique applicative.
- lorsqu'il est déterminé qu'une ou plusieurs ressources sont impliquées dans la défaillance suite à une raréfaction d'une ressource critique, alors le procédé comporte une étape de génération d'un rapport comportant une donnée sur la ou les ressources défaillantes et une étape de modification des ressources de l'infrastructure informatique.

D'autres avantages et caractéristiques de l'invention apparaitront à la lecture de la description suivante donnée à titre d'exemple illustratif et non limitatif, en référence aux Figures annexées qui représentent :
- Figures 1A et 1B, le taux d'occupation des processeurs (« central processing unit » - CPU) cumulé (Fig.1B) ou non (Fig.1A) de différentes structures informatiques, en fonction du temps (en mois), par des briques applicatives (B1, B2).
- Figure 2, une vue schématique des éléments du dispositif d'analyse du comportement d'une brique applicative soumise à une raréfaction des ressources selon un mode de réalisation de l'invention.
- Figure 3, une représentation schématique d'un procédé d'analyse du comportement d'une brique applicative soumise à une raréfaction des ressources selon l'invention. Les étapes encadrées par des pointillés sont facultatives.
- Figure 4, des étapes de préparation du dispositif et/ou d'initiation du procédé selon l'invention.
- Figure 5, une vue schématique de sous étapes d'une étape d'un procédé d'analyse du comportement d'une brique applicative soumise à une raréfaction des ressources selon un mode de réalisation de l'invention.
- Figure 6, une vue schématique d'un procédé d'analyse du comportement d'une brique applicative soumise à une raréfaction des ressources selon un mode de réalisation de l'invention.
- Figure 7, une analyse de la défaillance selon un mode de réalisation de l'invention.

Ainsi, des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou une partie d'instructions, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en œuvre par des systèmes matériels spéciaux qui exécutent les fonctions ou actes spécifiés ou effectuer des combinaisons de matériel spécial et d'instructions informatiques.

### [Description de l'inventionl

Dans la suite de la description, on entend par « comportement d'une brique applicative » les conditions d'exécution de la brique applicative tels que l'exécution des processus impliqués, les transactions internes ou externes, ou encore les performances de la brique applicative vis-à-vis des utilisateurs.

Le terme « résilience » au sens de l'invention correspond à la capacité d'une brique applicative à offrir le service attendu malgré la survenue d'un dysfonctionnement sur l'infrastructure informatique l'hébergeant ou d'une défaillance sur l'un de ses composants.

Par « infrastructure informatique », on entend au sens de l'invention un ensemble de structures informatiques (i.e. dispositifs informatiques) apte à faire fonctionner une application ou une chaine applicative. La structure informatique peut être un serveur ou plusieurs, par exemple être composée d'un serveur de présentation, d'un serveur métier et d'un serveur de données. L'infrastructure informatique peut également être un serveur « test » avec les mêmes ressources qu'un serveur de production ou bien un clone d'un serveur virtuel de production. De façon préférée, une structure informatique est un serveur.

L'expression « chaine applicative » au sens de l'invention correspond à un ensemble d'applications, reliées entre elles par un flot d'information et visant à proposer, au travers de plusieurs processus, une ou plusieurs fonctionnalités pouvant faire l'objet d'un accord de niveau de service (SLA pour « Service-level agreement »).

L'expression « brique applicative » au sens de l'invention correspond à une composante d'une application. La combinaison de briques applicatives est souvent nécessaire pour le fonctionnement d'applications, notamment d'applications métier, comme par exemple une application Web, une plateforme de partage de contenu ou une plateforme de calcul. Les briques applicatives de l'infrastructure informatique incluent, par exemple, un serveur ftp, un serveur de messagerie électronique, un serveur d'application Java et/ou une ou plusieurs bases de données.

Par « sonde » ou « sonde informatique », on entend au sens de l'invention un logiciel associé à un équipement qui permet d'effectuer, de gérer et faire remonter vers un équipement informatique des mesures destinées à informer entre autres des valeurs de paramètres de qualité de service, de l'état de fonctionnement des ressources ou de l'utilisation de ressources.

Par « plan de charge prédéterminé », on entend au sens de l'invention un fichier de configuration de la charge ou contrainte à appliquer à une infrastructure informatique. Le fichier de configuration peut par exemple être un fichier, ou un ensemble de fichiers, qui permet d'associer plusieurs données ou champs. Cette association de champs est aussi appelée un enregistrement de charge. Un tel fichier de configuration de charge est, par exemple, un fichier XML, un fichier CSV, un fichier INI, un fichier JSON.... Un fichier de configuration de charge peut comporter un ou plusieurs enregistrements de charge. Il peut être généré à partir d'information renseignées par un utilisateur.

On entend par « Ressources » des ressources matérielles telles que des paramètres, des capacités ou des fonctions de dispositifs informatiques permettant le fonctionnement d'une brique applicative ou d'une application. Un même dispositif informatique est associé généralement à plusieurs ressources. De même, une même ressource est généralement partagée entre plusieurs briques applicatives. Par exemple, le terme « ressource » peut inclure des ressources physiques ou virtuelles telles que des disques réseaux caractérisé par exemple par leurs entrées/sorties (I/O), la lecture/écriture sur des disques, le taux d'utilisation de la mémoire, un réseau caractérisé par sa bande passante, un processeur caractérisé par exemple par son utilisation (en pourcentage) ou le taux d'occupation de ses caches, une mémoire vive caractérisée par la quantité allouée, ou de façon plus globale le temps de latence d'un processus ou les pertes de paquets. Il n'est pas nécessaire de suivre toutes les ressources d'une infrastructure informatique pour mettre en œuvre le procédé selon l'invention et il est possible de former un groupe de ressources critiques dont l'utilisation est particulièrement importante. On entend par « utilisation des ressources », la consommation d'une ressource par exemple par une application métier constituée d'une ou de plusieurs briques applicatives venant monopoliser au moins une partie des ressources.

L'expression « ressource critique » au sens de l'invention correspond à la ou aux ressources dont l'utilisation dans des conditions nominales (i.e. usuelles) est la plus proche de son utilisation limite (seuil prédéterminé d'utilisation maximum) ou de sa saturation. Ainsi, la raréfaction d'une ressource critique fait que les conditions d'exécution de la brique applicative ne sont pas respectées (e.g. seuil de consommation des ressources non respectés ou temps de traitements non respectés). Par exemple, dans une infrastructure informatique comportant un CPU et 8Gb de RAM où en conditions usuelles il y a consommation de 80% de CPU et 2 Gb de RAM alors la ressource critique sera la ressource CPU.

Par « niveau d'une ressource » ou « niveaux de ressources », on entend au sens de l'invention une quantité de ressource. Par exemple, cela peut correspondre pour des disques réseaux, au nombre de disques réseaux disponibles ou à la quantité de mémoire disponible sur ces disques réseaux, pour un processeur, au nombre de cœurs ou au nombre de processeurs ou à la dimension des caches, pour une mémoire vive, à la quantité disponible, et pour des ports, le nombre de ports pouvant être ouverts simultanément. Le niveau initial d'une ressource correspond à la quantité de ressource disponible sur l'infrastructure informatique pour la ou les chaines applicatives. Le « pas d'une ressource » peut être d'une part la quantité minimale de ressource pouvant être ajoutée ou soustraite lors d'une étape de modification et d'autre part un multiple de la modification pouvant subir le niveau de ladite ressource. Certaines ressources présentent une granulométrie élevée (e.g. serveurs) alors que d'autre présentent une granulométrie faible (e.g. mémoire vive disponible).

Par « niveau d'utilisation de ressources », on entend, au sens de l'invention, une valeur représentative de la consommation ou de l'occupation de ladite ressource lors du fonctionnement d'une chaine applicative. Par exemple, la valeur d'utilisation peut correspondre pour des disques réseaux à leurs entrées/sorties, la lecture/écriture sur des disques, le taux d'utilisation de la mémoire, pour un réseau à sa bande passante, pour des processeurs à leur utilisation (en pourcent) ou au taux d'occupation des caches, pour de la mémoire vive la quantité utilisée et pour des ports, le nombre de ports ayant été ouverts simultanément lors du fonctionnement du procédé. La valeur d'utilisation est avantageusement ramenée au pourcentage du niveau de la ressource.

Par « seuil prédéterminé d'utilisation maximum », on entend au sens de l'invention une valeur maximale de paramètre associée à chaque ressource permettant un bon fonctionnement de ladite ressource. Par exemple, cela correspond aux limites maximales acceptables de consommations de ressources pour une infrastructure informatique hébergeant une ou plusieurs briques applicatives. Ces limites peuvent être réelles ou hypothétiques et correspondent généralement à un niveau d'utilisation au-delà duquel des dysfonctionnements peuvent survenir et ayant pour conséquence un arrêt de la ressource, de l'infrastructure informatique ou bien à tout le moins des baisses de qualités de service. Par exemple, le tableau 1 ci-dessous présente les seuils prédéterminés d'utilisation maximum pour trois ressources.

**Tableau 1**

| | CPU1 | Utilisation réseau | Utilisation Disque |
|---|---|---|---|
| Seuil prédéterminé d'utilisation maximum | 80 % | 350 KBps | 60 o/s |

Le terme « dysfonctionnement » au sens de l'invention correspond à la survenue d'un incident matériel ou d'une congestion sur la structure informatique hébergeant une brique applicative. Le terme « défaillance » au sens de l'invention correspond à une diminution de la qualité de service de la brique applicative de nature et/ou de sources diverses pouvant par exemple être issue une problématique de conception ou de configuration.

L'expression « niveau de service » ou « qualité de service » au sens de l'invention correspond à une appréciation de la qualité du service rendu par une brique applicative ou une chaine applicative. Un tiers peut s'engager sur un niveau de service et ainsi garantir de bonnes performances pour les applications critiques d'une organisation. L'expression « paramètre de qualité de service » au sens de l'invention correspond à des critères subjectifs ou objectifs tels que des temps de latence d'un processus, des pertes de paquets, des débits, des valeurs d'utilisation de ressources et des temps de réponse par requête. Il y a généralement une pluralité de paramètres de qualité de service. Il peut notamment y avoir un temps de réponse seuil différent pour chacune des requêtes différentes ou bien un temps de réponse global. L'expression « mode dégradé » au sens de l'invention correspond à un fonctionnement de la brique applique où seulement une partie des services sont maintenus.

L'expression « seuil prédéterminé de paramètre de qualité de service » au sens de l'invention correspond à une valeur de paramètre à laquelle peut s'engager un tiers afin de garantir de bonnes performances pour les applications critiques d'une organisation et tel que cela peut être défini dans un accord de niveau de service (SLA pour « Service-level agreement »). Par exemple, un seuil peut être du type : tous les temps de réponses sont à moins de 3 secondes. Néanmoins, il peut être avantageux de disposer de seuils détaillés en fonction des actes métiers. Par exemple, une requête mettant en œuvre une impression de fichier peut présenter un seuil de temps de réponse plus élevé qu'une requête comportant l'affichage d'une page internet. Les seuils prédéterminés de paramètres de qualité de service peuvent inclure également des seuils prédéterminés maximum d'utilisation. Dans le cadre de l'invention, une ressource critique peut être une ressource pour laquelle une diminution de son niveau de ressource ou un dépassement du seuil prédéterminé d'utilisation maximum entrainerait un impact important sur un ou plusieurs niveaux de service de briques applicatives. On entend par « dépassement » au sens de l'invention, un surpassement ou un abaissement 10%, de préférence de 20% des valeurs prédéterminées par les valeurs mesurées.

On entend par « traiter », « calculer », « déterminer », « afficher », « extraire » « comparer » ou plus largement « opération exécutable », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

L'expression « interface homme-machine » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans la suite de la description, les mêmes références sont utilisées pour désigner les mêmes éléments.

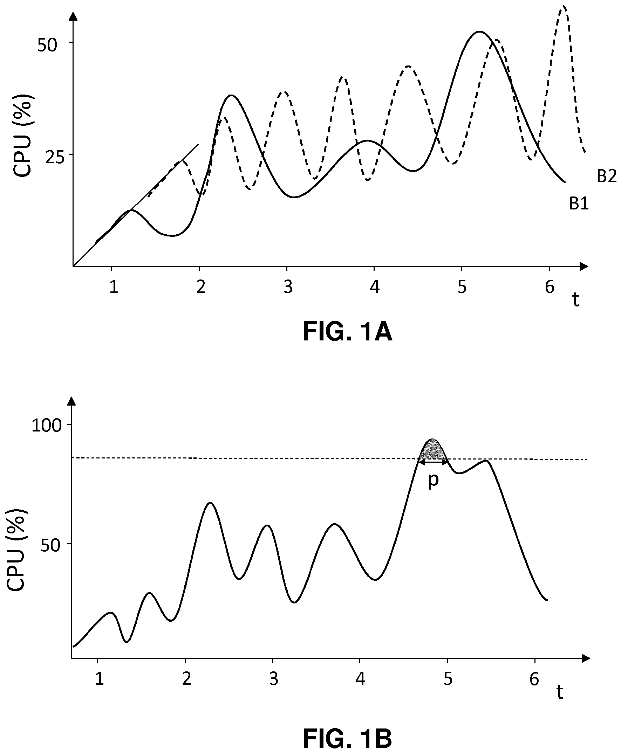

**Les** **figures 1A et 1B** illustrent la consommation de ressources, ici le taux d'occupation du CPU, en fonction du temps, par des briques applicatives (B1, B2) hébergées sur une même infrastructure informatique. La Figure 1A présente les consommations en CPU des briques applicatives en fonction du temps et en fonction de la capacité maximale de la structure informatique sur laquelle elles sont actuellement hébergées.

La figure 1B présente le cumul en fonction du temps des consommations en CPU sur l'infrastructure informatique 1 des briques applicatives B1 etB2. La figure 1B montre que malgré que la consommation soit contrôlée en première période, il y a un peu après, environ cinq mois, un dépassement sur une durée p d'un seuil prédéterminé d'utilisation maximum (ligne pointillée). Un tel dépassement entraine un risque de défaillance sur l'une ou l'autre de ces briques applicatives.

Une méthode classique de sécurisation du fonctionnement de la brique applicative B1 ou de la brique B2 pourrait être d'augmenter encore la quantité de ressources disponibles pour les briques applicatives selon des prédictions d'augmentation des besoins. Pourtant, une défaillance associée à une saturation (i.e. raréfaction) d'une ressource critique peut survenir même si une marge de ressource a été prévue.

Ainsi, les inventeurs ont développé un nouveau dispositif 1 d'analyse du comportement d'une brique applicative 2 soumise à une raréfaction des ressources dans une infrastructure informatique 4. Ce dispositif permet avantageusement d'étudier le comportement d'une brique applicative faisant face à une raréfaction des ressources. Par exemple, il peut être utilisé pour déterminer le comportement d'une brique applicative faisant face à une perte de plus 10, 20, 30 ou 40 % de mémoire vive disponible, vérifier si la brique applicative continue de fonctionner et, le cas échéant, déterminer la nature de la défaillance.

Ce dispositif peut en outre être utilisé pour augmenter la résilience d'une brique applicative. Une brique applicative dont la résilience aura été augmentée pourra par exemple continuer à fonctionner malgré une réduction de la disponibilité de plus de 10, 20, 30 ou 40 % d'une ou de plusieurs ressources utilisées. Alternativement, une brique applicative dont la résilience aura été augmentée pourra maintenir opérationnelles ses fonctions principales (i.e. essentielles) malgré une réduction importante des ressources disponibles.

Ainsi, contrairement aux dispositifs ou systèmes de l'art antérieur, l'administrateur SI connaitra, en cas de dysfonctionnement ou de pic de charge, quel est le niveau de réduction des ressources disponibles que les briques applicatives peuvent supporter, qu'il y ait eu ou non une amélioration de la résilience aux saturations de ressources. En outre, l'utilisation du dispositif selon l'invention peut lui permettre de modifier la brique applicative et/ou son environnement de façon à augmenter sa résilience face aux réductions de ressources. En effet, le dispositif selon l'invention est aussi un outil permettant à l'administrateur SI de déterminer quelle modification permettra d'assurer une haute disponibilité de la brique applicative étudiée.

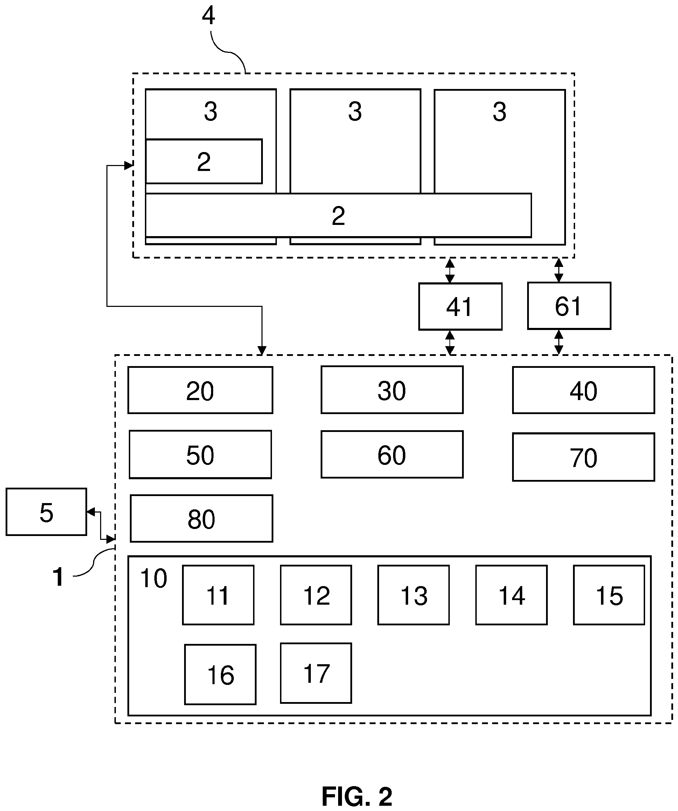

La **figure 2** illustre schématiquement une représentation fonctionnelle non limitative d'un dispositif 1 d'analyse du comportement d'une brique applicative 2 soumise à une raréfaction des ressources dans une infrastructure informatique 4. L'infrastructure informatique 4 peut comporter une ou plusieurs structures informatiques 3 (e.g. serveur, machine, machine virtuelle) et la ou les briques applicatives 2 peuvent faire appel à une seule ou à plusieurs structures informatiques 3. L'infrastructure informatique 4 désigne de préférence une architecture de préproduction présentant une configuration semblable ou identique à une architecture de production et pouvant par exemple prendre la forme d'une machine virtuelle.

Le dispositif1 comporte un module 10 de mémorisation, un module 20 de raréfaction de ressources, un module 30 d'injection, un module 40 de collecte de métriques, un module 50 de détection de défaillance, et un module 60 de gestion de performance applicative. Le dispositif 1 peut aussi être configuré (e.g. via un logiciel dédié) pour mettre en œuvre le procédé d'analyse de comportement selon l'invention.

Un **module 10 de mémorisation** est apte à, de préférence configuré pour, mémoriser une pluralité de référentiels. Pour cela, le module 10 de mémorisation peut comprendre n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques. Le module 10 de mémorisation peut comprendre une pluralité d'instructions ou de modules ou d'applications pour effectuer diverses fonctionnalités. Ainsi, le module 10 de mémorisation peut mettre en œuvre des routines, des programmes, ou des structures de données de type matricielle. De façon préférée, le module 10 de mémorisation peut comprendre un support lisible par un système informatique sous la forme d'une mémoire volatile, telle qu'une mémoire vive (RAM) et / ou une mémoire cache. Le module 10 de mémorisation peut par exemple être connecté avec les autres composants du dispositif 1 via un bus et une ou plusieurs interfaces de support de données.

Le module 10 de mémorisation est notamment configuré pour mémoriser un **référentiel 11 de ressources** configuré pour mémoriser des données d'identification de ressources critiques utilisées par la brique applicative. Le référentiel 11 de ressources peut par exemple être configuré pour mémoriser des données d'identification des différentes machines virtuelles ou partitions supportant la ou les briques applicatives étudiées. La ressource critique peut par exemple être une mémoire vive mais de nombreuses autres ressources peuvent être considéré telles que la lecture/écriture d'un disque, la lecture/écriture d'un réseau, ou le taux d'utilisation d'une mémoire. En outre, le référentiel 11 de ressources peut être configuré pour mémoriser la quantité disponible de ressources critiques (e.g. CPU nombre et puissance, quantité de mémoire).

Plus particulièrement, une ressource critique peut être une ressource dont la consommation moyenne est supérieure à 60 % ou bien une ressource dont la consommation présente un ou plusieurs pics de consommation supérieurs à 70 % ou encore une ressource dont une perte de 20 % ou plus de disponibilité entraine une défaillance sur la brique applicative étudiée. Le dispositif 1 selon l'invention peut aussi être en mesure d'identifier quelles sont les ressources d'importances pour le fonctionnement de la brique applicative.

Le module 10 de mémorisation est également configuré pour mémoriser un **référentiel 12 de règles d'exécution.** Le référentiel 12 de règles d'exécution est configuré pour mémoriser des données correspondant à des seuils prédéterminés de paramètre de qualité de service, au-delà desquels la brique applicative est considérée en défaillance (i.e. dysfonctionnement).

Avantageusement, le référentiel 12 de règles d'exécution est configuré pour mémoriser plusieurs catégories de seuils prédéterminés de paramètre de qualité de service avec par exemple une catégorie correspondant aux niveaux de services au-delà desquels une brique applicative est considérée comme fournissant un service dégradé mais acceptable et une catégorie correspondant aux niveaux de services au-delà desquels une brique applicative est considérée comme défaillante. Ainsi, la catégorie peut correspondre à un indicateur d'acceptabilité du niveau de service avec par exemple des valeurs de type : fonctionnement attendu, fonctionnement acceptable, fonctionnement inacceptable.

De façon préférée, les seuils prédéterminés de paramètre de qualité de service comportent au moins des valeurs de temps de réponse, les seuils prédéterminés de paramètre de qualité de service peuvent également comporter des valeurs de consommation de CPU, d'utilisation réseau ou disque. Plusieurs ressources peuvent être mesurées en parallèle de même que plusieurs indicateurs de niveau de service peuvent être suivis en parallèle. De préférence, les niveaux de service sont mesurés régulièrement et peuvent correspondre par exemple à un temps de réponse de recherche de moins d'une seconde.

De façon préférée, le référentiel 12 de règles d'exécution est configuré pour mémoriser des données correspondant à des seuils prédéterminés de paramètre de qualité de service au-delà desquels la brique applicative est considérée en défaillance.

Le module 10 de mémorisation est également configuré pour mémoriser un **référentiel 13 de raréfaction.** Le référentiel 13 de raréfaction est configuré pour mémoriser des règles de consommation des ressources critiques pouvant être utilisées pour une raréfaction progressive des ressources critiques. Ainsi, ce référentiel 13 de raréfaction est configuré pour mémoriser des instructions permettant la consommation et donc la raréfaction des ressources disponibles pour la brique applicative 2. Une telle consommation des ressources peut être réalisée selon la méthode de génération de bruit décrite dans le document EP2975526.

Les ressources critiques consommées via la mise en œuvre des règles de consommation peuvent inclure (mais ne sont pas limitées à) un type de réseau, des conditions associées au réseau, une bande passante de transmission et / ou de réception disponible, une puissance / énergie disponible, une puissance de processeur disponible (par exemple vitesse d'horloge, nombre de cœurs, cache, etc.) et une quantité disponible de la mémoire.

Comme mentionné, la raréfaction est générée via une consommation des ressources dont la partie consommée (i.e. utilisée ou occupée) n'est alors plus disponible pour la brique applicative dont le comportement est étudié. Le référentiel 13 de raréfaction permet ainsi de définir des règles de consommation pour une modification progressive de la raréfaction des ressources de différentes machines virtuelles.

Les règles de consommation peuvent être considérées comme créant un environnement dégradé pour la ou les briques applicatives étudiées car les règles de consommation peuvent contrôler à quelle quantité de ressources de l'infrastructure informatique 4 la ou les briques applicatives 2 étudiées accèdent. Les règles de consommation des ressources critiques comportent avantageusement au moins les données suivantes :
- un niveau de consommation de ressource de départ, correspondant par exemple à la plus faible quantité de ressource à consommer ;
- un niveau final de consommation de ressource, correspondant par exemple à la plus forte quantité de ressource à consommer ;
- un pas d'augmentation de la consommation, correspondant par exemple à la différence entre une première quantité de ressource à consommer et une quantité suivante, et
- une durée prédéterminée entre chaque pas d'augmentation.

Ainsi, le référentiel 13 permet de définir de façon simple une raréfaction progressive des ressources critiques.

L'existence d'une durée prédéterminée entre chaque pas d'augmentation permet de soumettre la brique applicative à une raréfaction donnée de ressources pendant une durée suffisante pour engendrer une défaillance. Ainsi, la durée entre chaque pas d'augmentation peut par exemple être supérieure ou égale à cinq minutes ou supérieure ou égale à dix minutes. Avantageusement, la durée entre chaque pas d'augmentation n'est pas trop longue de façon à permettre une étude rapide du comportement de la brique applicative. Par exemple, la durée prédéterminée entre chaque pas d'augmentation est inférieure à deux heures.

Le référentiel 13 peut prendre la forme d'un ou plusieurs fichiers de configuration de raréfaction de ressources ou d'instructions transmises à partir d'une interface graphique ou de toute autre interface de communication. En effet, ces valeurs pourront être préenregistrées ou bien renseignées via une interface lors de la mise en œuvre de l'étude du comportement de la brique applicative.

Certaines données de règles de consommation des ressources critiques sont avantageusement renseignées lors de la mise en œuvre de l'étude du comportement de la brique applicative. C'est par exemple le cas de la date de début de la raréfaction et l'identifiant de la ressource critique à raréfier.

Lorsque ces données sont enregistrées, elles le sont par exemple dans un fichier de configuration de raréfaction de ressources étant, par exemple, un fichier XML, un fichier CSV, un fichier INI, ou un fichier JSON. Un fichier de configurations comporte un ou plusieurs enregistrements de configuration. Dans une variante, le fichier de configuration de raréfaction est enregistré dans une base de données.

En outre, les règles de consommation peuvent spécifier un ordre des différentes raréfactions à réaliser et une durée pendant laquelle chaque raréfaction doit être exécutée.

Le module 10 de mémorisation est également apte à, de préférence configuré pour, mémoriser un **référentiel 14 de charge applicative.** Le référentiel 14 de charge applicative est configuré pour mémoriser un plan de charge prédéterminé, de préférence représentatif du fonctionnement de la brique applicative.

Le plan de charge prédéterminé est représentatif du fonctionnement classique, ou de la charge nominale, de la brique applicative 2 à tester. Ainsi, le plan de charge prédéterminé peut être utilisé pour générer des contraintes sur l'infrastructure informatique simulant l'activité et donc l'utilisation de ressources par la brique applicative 2 à tester. La charge nominale correspond à l'activité courante sur l'applicatif ou la charge habituellement observée en production pour la brique applicative. Cela peut correspondre par exemple à une distribution de différents types de scénarios reproduisant les principales actions de la brique applicative avec par exemple combien de scénarios à l'heure de chacun des types doit être joué pour mimer le fonctionnement de la brique applicative. En effet, au cours du procédé selon l'invention, pour simuler le fonctionnement de la brique applicative, il n'est pas nécessaire de reproduire l'exhaustivité des actions ou requêtes prises en charge par ladite brique applicative lors de son utilisation courante. Ainsi, l'ensemble de requêtes peut se limiter à la simulation des principaux scénarios métiers dans lesquels la brique applicative est impliquée.

Ainsi, le plan de charge comporte avantageusement des valeurs sur les paramètres suivants : les différents types de scénario, la pondération de chacun de ces scénarios métiers (e.g. la proportion relative des uns par rapport aux autres), et le niveau de charge globale (e.g.la volumétrie cible ou le débit de requêtes souhaité au cours du procédé). De façon équivalente, il peut comporter des informations sur le nombre de scénarios de chaque type exécutées en simultané, par exemple pendant une heure. Il peut aussi comporter des informations sur l'infrastructure informatique testée.

L'ensemble de requêtes est généralement enregistré dans un fichier de commande de charge comportant le code devant être exécuté. L'exécution du fichier de commande de charge peut produire un certain nombre d'actions aussi diverses que la création, la consultation, la modification, la suppression de fichiers ou l'impression, la copie et l'affichage de données. Ces actions seront généralement similaires aux actes métiers principaux pris en charge par la brique applicative. Ainsi, comme cela sera détaillée par la suite, le procédé selon l'invention peut également comporter une étape de chargement d'un fichier de commande de charge.

Ce référentiel 14 de charge applicative peut être configuré pour mémoriser des instructions, sous la forme d'un plan de charge, permettant de simuler l'activité de la brique applicative 2 étudiée. Le fichier de configuration du plan de charge peut également comprendre des champs relatifs à la date de début de la charge, il s'agit par exemple d'une date absolue évaluée relativement à une horloge interne du dispositif 1 ou d'une date relative au début d'un scénario de test. Il peut également comprendre la date de fin de la charge ou la durée de la charge, par exemple un nombre de secondes.

En outre, le module 10 de mémorisation peut être apte à, de préférence configuré pour, mémoriser un **référentiel 15 de connaissances** configuré pour mémoriser des données prédéterminées de défaillances en fonction de données d'exécution.

Ainsi, le référentiel 15 de connaissances comporte des données relatives aux différences sources et natures de défaillances de briques applicatives (i.e. les données prédéterminées de défaillances) qui sont corrélées à des données d'exécution. Il peut donc être utilisé pour générer des informations sur les défaillances de la brique applicative en fonction de données d'exécution mesurées.

De préférence, le référentiel 15 de connaissances peut comporter une liste de nature de défaillance en fonction de données d'exécution mesurées.

En outre, le module 10 de mémorisation peut être apte à, de préférence configuré pour, mémoriser un **référentiel 16 de règles d'évolution.** Le référentiel 16 de règles d'évolution est configuré pour mémoriser des paramètres de défaillance prédéterminés et des données d'action corrective associées à des paramètres de défaillance prédéterminés. Ainsi, le référentiel 16 de règles d'évolution peut être configuré pour mémoriser des associations entre des paramètres de défaillance prédéterminés (e.g. données d'exécution et/ou nature de défaillance) et des données relatives à au moins une action corrective.

Avantageusement, les données relatives à au moins une action corrective peuvent comporter des rapports à destination d'un administrateur ou bien des instructions exécutables permettant de modifier la configuration de l'infrastructure informatique ou de la brique applicative (e.g. Java Messaging Service - JMS, Java Database Connectivity - JDBC).

De préférence, le référentiel 16 de règles d'évolution est configuré pour mémoriser des actions correctives en fonction de données de défaillance.

En outre, le module 10 de mémorisation peut être apte à, de préférence configuré pour, mémoriser un **référentiel 17 de ressources accessibles.** Le référentiel 17 de ressources accessibles est configuré pour mémoriser des données caractéristiques de ressources accessibles. De préférence, les données caractéristiques de ressources accessibles comportent, pour au moins un type de ressource, des données de quantité disponible de la ressource accessible ainsi qu'une donnée correspondant à un indicateur de complexité de mise à disposition de la ressource accessible.

Les ressources accessibles sont par exemple des ressources non affectées que l'administrateur du SI peut affecter à l'infrastructure informatique 4 et plus particulièrement à la brique applicative 2 dont le comportement est étudié. Ainsi, ce référentiel 17 peut correspondre à un listing de données sur des ressources pouvant être ajoutées à l'infrastructure informatique 4 afin d'améliorer la résilience de la brique applicative 2 étudiée.

Le référentiel 17 peut notamment contenir pour chaque ressource : son type, sa quantité, la liste des serveurs compatible. Ainsi, les caractéristiques de ressources disponibles peuvent de préférence comporter :
- une donnée d'identification de la ressource disponible,
- une donnée sur le type de ressource disponible,
- une liste de structures informatiques 3 (e.g. serveurs) compatibles avec la ressource disponible, et/ou
- une donnée sur la quantité de ressource disponible.

Ce référentiel peut également comporter des données relatives à la complexité d'intégration de ladite ressource. La donnée correspondant à un indicateur de complexité d'évolution est représentative de la complexité pour faire évoluer (i.e. à la baisse et/ou à la hausse) les ressources de la ou des structures informatiques 3. Par exemple, en fonction des ressources, celles-ci peuvent être en stock (i.e. complexité faible) ou déjà utilisées sur un autre serveur (i.e. complexité élevée). En outre, l'ajout ou le retrait d'une mémoire vive et l'ajout d'un disque sont des actions relativement aisées et rapides alors que le retrait d'un disque est une opération plus délicate. En outre, les ajouts de puissance conférés à un serveur virtuel sont très aisés.

Avantageusement, le référentiel 17 de ressources accessibles comporte en outre une donnée correspondant à un indicateur de compatibilité. L'indicateur de compatibilité permet de déterminer sur quelles structures informatiques la ressource disponible pourra être installée. Les données mémorisées via le référentiel 17 de ressources accessibles sont généralement renseignées, par un utilisateur, via une IHM. Les données mémorisées via le référentiel 17 de ressources accessibles peuvent également être reçues via un module de communication et provenir d'un logiciel de gestion des stocks de ressources accessibles.

Le tableau 2 ci-dessous illustre un référentiel 17 de ressources accessibles selon un mode de réalisation détaillant la compatibilité en fonction des structures informatiques 3 (S1, S2-Virt, S3).

**Tableau 2**

| Type de ressource | Compatibilité | Quantité | Indicateur de complexité |
|---|---|---|---|
| Disque - 4 To | S1, S3 | 10 | 1 |
| Mémoire - 2 Go | S1, S3 | 10 | 3 |
| Mémoire - 1 Go | S2-Virt | 8 Go | 1 |

Le dispositif selon l'invention comporte **un module 20 de raréfaction de ressources.** Le module 20 de raréfaction de ressources est apte à, de préférence configuré pour, générer une consommation contrôlée d'au moins une ressource critique selon les règles de consommation préalablement mémorisées sur le référentiel 13 de raréfaction.

Le module 20 de raréfaction de ressource présente avantageusement pour fonction de simuler progressivement la raréfaction d'une ressource critique. Ainsi, il est possible d'augmenter progressivement la raréfaction de la ressource critique jusqu'à provoquer une défaillance de l'application ou de la brique applicative 2.

De façon préférée, le module 20 de raréfaction de ressources est configuré pour générer une consommation contrôlée d'au moins une ressource critique selon les règles de consommation préalablement mémorisées sur le référentiel 13 de raréfaction. Il peut y avoir une consommation d'une ressource critique ou bien une consommation simultanée de plusieurs ressources critiques.

Par exemple, la raréfaction d'une ressource peut reposer sur tout ou partie des données suivantes :
- un identifiant du composant ou de la ressource à perturber : par exemple une adresse réseau ;
- une valeur de date de début de la raréfaction, il peut par exemple s'agir d'une date absolue évaluée relativement à une horloge interne du dispositif produisant la raréfaction ; et
- une valeur de durée de la raréfaction (e.g. nombre de secondes) ou une valeur de date de fin de la raréfaction.

Ces valeurs pourront par exemple être acquises par le module 20 de raréfaction de ressource via un appel à un ou plusieurs fichiers de configuration de raréfaction de ressources du référentiel 13 de raréfaction ou bien à des instructions transmises à partir d'une interface (e.g. graphique). Ainsi, le module 20 de raréfaction peut être configuré pour recevoir et prendre en compte des règles de consommation. Ces règles de consommation sont par exemple renseignées via une interface graphique et mémorisées sur une mémoire par exemple une mémoire vive.

Le référentiel 13 de raréfaction couplé au module 20 de raréfaction permettent la génération de codes dont l'exécution entraine la mise en œuvre de la raréfaction (i.e. la consommation de ressources). Ces codes sont soit des codes objets, par exemple pour la raréfaction de la mémoire, soit des scripts dits « shell » ou scripts shell. Les codes peuvent également être des codes compilables, la compilation étant réalisée au moment de la mise en place de la raréfaction.

Comme cela sera détaillé ci-après, le dispositif est configuré pour réaliser la raréfaction de ressource(s) en parallèle d'un maintien d'un niveau de charge de la brique applicative à qualifier (i.e. étudiée).

Le dispositif 1 selon l'invention comporte également **un module d'injection 30.** Le module d'injection 30 est apte à, de préférence configuré pour, soumettre l'infrastructure informatique 4 à une charge correspondant à la charge applicative de la brique applicative 2 selon un plan de charge prédéterminé mémorisé sur le référentiel 14 de charge applicative. De préférence, la charge correspond à la charge applicative nominale.

Les données de charge, contenues dans le plan de charge, peuvent être utilisées par le module d'injection 30 afin de réaliser un plan de charge permettant de simuler une activité de la brique applicative avec par exemple l'ouverture et l'envoi de fichiers, des sauvegardes ou encore de la navigation sur internet.

La soumission de l'infrastructure informatique 4 à la charge applicative est de façon préférée obtenue en utilisant des mécanismes d'injection tels que JMeter, Tsung ou Gatling. De préférence, cela est réalisé par l'injection de requêtes selon un plan de charge prédéterminé.

Le dispositif 1 selon l'invention comporte également un **module 40 de collecte de métriques.** Le module 40 de collecte de métriques est apte à, de préférence configuré pour, mesurer la consommation des ressources de l'infrastructure informatique 4 et/ou les niveaux de service de la brique applicative 2. De façon préférée, le module 40 de collecte de métriques est configuré pour générer des valeurs mesurées de niveaux de service de la brique applicative.

Pour cela, le module 40 de collecte de métriques peut faire appel à une sonde 41 ou à une pluralité de sondes 41. La ou les sondes 41 permettent de collecter des données sur la consommation des ressources de l'infrastructure informatique 4 et plus particulièrement de chaque structure applicative 3 la composant. Plusieurs ressources peuvent être mesurées en parallèle. La ou les sondes 41 peuvent également être utilisées pour mesurer les niveaux de services de la brique applicative 2. Le module 40 de collecte peut faire appel à un fichier de surveillance comportant des règles de collecte de métriques. Ces règles de collecte de métriques peuvent spécifier des données qui doivent être enregistrées lors de l'exécution de la brique applicative.

Ces mesures peuvent par exemple être réalisées à partir d'une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais).

Ces sondes peuvent être associées à chaque paramètre (e.g. ressource ou fonctionnalités) pour remonter les informations de mesure ou métriques, représentant par exemple l'état de fonctionnement des ressources et la consommation associée. Pour chaque paramètre, la ou les sondes définissent un identifiant de paramètre et une valeur de paramètre. Les valeurs des paramètres peuvent être suivies en continu ou à des intervalles configurables de façon à obtenir des informations pour chaque paramètre en fonction du temps. Ces informations peuvent être stockées dans une mémoire. Dans certains modes de réalisation, le dispositif comporte une interface homme-machine permettant de définir les sondes sur chaque machine qui remontent les métriques provenant de l'utilisation des ressources de la machine.

Le module 40 de collecte de métrique permet de collecter et mesurer la consommation des ressources et/ou les niveaux de service de la brique applicative.

Le dispositif selon l'invention comporte également un **module 50 de détection de défaillance.** La détection d'une défaillance via les valeurs mesurées de niveaux de service permet de suivre la performance de la brique applicative et peut par exemple se référer aux performances constatées par les utilisateurs finaux de la brique applicative telle que par exemple un temps de réponse moyen.

Le module 50 de détection de défaillance est apte à, de préférence configuré pour, comparer les seuils prédéterminés de paramètre de qualité de service aux valeurs mesurées de la consommation des ressources et/ou des niveaux de service de la brique applicative. Le module 50 de détection de défaillance est généralement configuré pour identifier un dépassement des valeurs maximales prédéterminées par les valeurs mesurées.

Ainsi, le module 50 de détection de défaillance est avantageusement configuré pour permettre aux administrateurs SI d'implémenter des règles définissant quels types d'événements constituent un comportement anormal et d'analyser les données collectées pour identifier lorsqu'un comportement anormal s'est produit pendant la consommation contrôlée des ressources. Le module 50 de détection de défaillance peut en outre être configuré pour, en présence d'un dépassement, interrompre la consommation contrôlée.

Le dispositif selon l'invention comporte également un **module 60 de gestion de performance applicative.** Le module 60 de gestion de performance applicative est apte à, de préférence configuré pour, en présence d'un dépassement, les seuils prédéterminés de paramètre de qualité de service analyser le comportement de la brique applicative et générer des données de défaillances capables d'informer sur la nature et/ou la source de la défaillance.

Ainsi, une fois une défaillance provoquée, le dispositif 1 selon l'invention peut déterminer, notamment à l'aide du module 60 de gestion de performance applicative, la nature de la défaillance. La défaillance peut avoir de nombreuses natures. Par exemple, elle peut être liée à des problématiques de configuration système (nombre de fichiers ouvert, nombre de ports, etc.) tout comme à des problèmes de configuration applicative (file jms, pool jdbc, etc...) voir à des problèmes de conception de la brique applicative tel qu'un couplage trop fort entre des traitements.

De façon préférée, le module 60 de gestion de performance applicative est configuré pour mettre en œuvre des fonctionnalités de profiling ou d'analyse de trace de façon à identifier la nature de la défaillance.

En particulier, le module 60 de gestion de performance applicative est configuré pour effectuer une surveillance et un suivi de transactions individuelles et pour fournir des données décrivant les détails d'exécution internes, les performances et le comportement de chaque transaction surveillée individuelle.

Pour cela, le module 60 de gestion de performance applicative peut comporter des collecteurs de traces 61 déployés sur les processus impliqués dans l'exécution de la brique applicative étudiée. Ces collecteurs de traces 61 sont configurés pour identifier les transactions exécutées par les processus de la brique applicative étudiée et capturer les détails d'exécution de ces transactions. Ces collecteurs de traces 61 peuvent également surveiller les communications entrantes et sortantes effectuées par les processus auxquels ils sont associés de façon à corréler des données de trace d'une transaction aux parties (e.g. composants ou briques applicatives tierces) impliquées dans cette transaction.

Le module 60 de gestion de performance applicative peut pour cela comporter un ou plusieurs collecteurs de traces 61. Un collecteur de traces est configuré pour surveiller l'exécution de la brique applicative et créer une trace d'exécution. Par exemple, le collecteur de traces 61 peut enregistrer des informations associées à l'exécution de la brique applicative, telles que d'autres briques applicatives avec lesquelles la brique applicative communique et à quelles zones de mémoire la brique applicative accède. Ces informations provenant du ou des collecteurs de traces 61 peuvent être collectées et stockées en tant que données puis être analysées par le module 60 de gestion de performance applicative.

Le module 60 de gestion de performance applicative est donc avantageusement configuré pour traiter des données d'exécution (i.e. traces) en réponse à la détection d'une défaillance. Par exemple, les collecteurs de trace 61 peuvent s'exécuter de façon à générer une trace d'exécution lorsque l'utilisation de la mémoire dépasse un seuil prédéterminé puis le module traite les données de façon à identifier la nature de la défaillance.

De façon préférée, le module 60 de gestion de performance applicative est configuré pour suivre des paramètres de l'exécution de la brique applicative étudiée pendant que la consommation contrôlée des ressources est réalisée.

Ces données d'exécution peuvent être corrélées aux raréfactions pour déterminer quels niveaux de raréfaction ont provoqué le comportement de l'application (par exemple dégradation des performances, consommation excessive d'une ou plusieurs ressources). Par exemple, le module 60 de gestion de performance applicative peut corréler les raréfactions avec les données surveillées de niveau de service (par exemple, en utilisant des horodatages ou d'autres informations). Ainsi, avantageusement, le module 60 de gestion de performance applicative peut être configuré pour corréler un niveau de ressources disponibles à un niveau de service.

En outre, le module 60 de gestion de performance applicative peut corréler les détails d'exécution des transactions réalisées lors des raréfactions et en particulier lors d'une défaillance de façon à identifier la nature de la défaillance. Par exemple, le module 60 de gestion de performance applicative peut corréler les raréfactions avec les données d'exécution surveillées pour déterminer qu'une diminution de la quantité de mémoire disponible peut entraîner une augmentation non souhaitée des lectures/écritures (I/O) disques, ou encore qu'une certaine vitesse du processeur peut entraîner une augmentation de l'utilisation de la mémoire ou encore qu'un dispositif de stockage est défaillant car il ne supporte pas une augmentation modérée des I/O. Ainsi, le module 60 de gestion de performance applicative est de préférence configuré pour identifier la nature de la défaillance. La nature de la défaillance peut par exemple être liée à l'infrastructure informatique (e.g. configuration matérielle ou logicielle) ou à la brique applicative (e.g. configuration ou conception).

Ainsi, le module 60 de gestion de performance applicative est de préférence configuré pour sélectionner la nature de la défaillance parmi les défaillances suivantes :
- configuration matérielle de l'infrastructure informatique,
- configuration logicielle de l'infrastructure informatique,
- configuration de la brique applicative, et
- conception de la brique applicative.

Le module 60 de gestion de performance permet d'informer sur la nature et/ou la source de la défaillance.

Avantageusement, le dispositif selon l'invention peut également comporter **un module 70 d'amélioration de la résilience.** Ce module permet, à partir d'un référentiel 16 de règles d'évolution, de sélectionner la ou les solutions à mettre en œuvre en fonction du type de défaillance (i.e. source et/ou nature). Ainsi, le module 70 d'amélioration de la résilience est apte à, de préférence configuré pour, sélectionner au moins une action corrective à partir des données de défaillances générées par le module 60 de gestion de performance applicative et d'un référentiel 16 de règles d'évolution comportant des valeurs prédéterminées des paramètres de défaillance.

Le module 70 d'amélioration de la résilience est de préférence configuré pour comparer la nature de la défaillance identifiée et/ou les données d'exécution mesurées à des valeurs prédéterminées des paramètres de défaillances.

Par exemple, si la nature de la défaillance identifiée en présence de la raréfaction de ressources est d'I/O défaillants ou excessifs, alors l'action corrective sélectionnée peut correspondre à une instruction de changement du dispositif de stockage concerné. Alternativement, en fonction du nombre de requêtes I/O, l'action corrective sélectionnée peut correspondre à une instruction d'augmentation de la quantité de mémoire sur une ou plusieurs structures informatiques 3 de façon à éviter une surcharge des disques en présence d'une raréfaction de ressources.

Le module 70 d'amélioration de la résilience peut être configuré pour envoyer à un administrateur une instruction comportant des données relatives à au moins une action corrective. Alternativement, le module 70 d'amélioration de la résilience peut être configuré pour exécuter une action corrective telle que par exemple l'ouverture de ports supplémentaires. Ainsi, il peut être apte à, de préférence configuré pour, mettre en œuvre lesdites actions correctives pour permettre à l'application (i.e. la brique applicative) d'être résiliente à une raréfaction de ressources.

Ainsi, avantageusement, le module 70 d'amélioration de la résilience surveille la brique applicative et traite les données d'exécution associées à la brique applicative. Le module 70 d'amélioration de la résilience analyse les données d'exécution collectées et/ou les données de défaillance pour associer une défaillance identifiée avec une action corrective prédéterminée et enregistrée dans un référentiel 16 de règles d'évolution.

Avantageusement, le dispositif selon l'invention peut également comporter **un module 80 d'évolution d'infrastructure.** Le module 80 d'évolution d'infrastructure est apte à, de préférence configuré pour, générer au moins un plan d'évolution listant des modifications de ressources à effectuer dans l'infrastructure informatique 4 à partir des données caractéristiques de ressources accessibles du référentiel 17 de ressources accessibles et des données de défaillances.

Les différents modules ou référentiels sont distincts sur la figure 2 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique.

Le dispositif 1 selon l'invention peut être intégré dans un système informatique et ainsi être apte à communiquer avec un ou plusieurs dispositifs externes tels qu'un clavier, un dispositif de pointage, un affichage, ou tout dispositif permettant à un utilisateur d'interagir avec le dispositif 1. Il faut comprendre que bien que non représenté, d'autres composants matériels et / ou logiciels pourraient être utilisé en conjonction avec un dispositif 1. Ainsi, dans un mode de réalisation de la présente invention, le dispositif 1 peut être couplé à une interface homme machine (IHM). L'IHM, comme déjà abordé, peut être utilisée pour permettre la transmission de paramètres aux dispositifs ou à l'inverse mettre à disposition de l'utilisateur les valeurs des données mesurées ou calculées par le dispositif. De façon générale, l'IHM est couplée de manière communicative avec un processeur et elle comprend une interface de sortie utilisateur et une interface d'entrée utilisateur. L'interface de sortie utilisateur peut comprendre une interface d'affichage et de sortie audio et divers indicateurs tels que des indicateurs visuels, des indicateurs audibles et des indicateurs haptiques. L'interface d'entrée utilisateur peut comprendre un clavier, une souris ou un autre module de navigation curseur tel qu'un écran tactile, un pavé tactile, une interface d'entrée de stylet et un microphone pour l'entrée de signaux audibles tels qu'un discours d'utilisateur, des données et des commandes qui peuvent être reconnues par le processeur.

Dans un mode de réalisation de la présente invention, le dispositif 1 peut être couplé à une interface de communication, par exemple une interface réseau de type Ethernet, FiberChannel, InfiniBand ou n'importe quels dispositifs permettant au dispositif 1 de communiquer avec un ou plusieurs autres dispositifs informatiques.

En outre, comme cela sera apprécié par l'homme de l'art, des aspects de la présente invention peuvent être réalisés en tant que système, procédé ou produit de programme d'ordinateur. En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).

Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage. Le code de programme peut s'exécuter entièrement sur l'ordinateur d'un utilisateur, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur produisent un dispositif informatique configuré pour mettre en œuvre l'invention.

Selon **un autre aspect,** l'invention porte sur un **procédé d'analyse du comportement d'une brique applicative** 2 soumise à une raréfaction des ressources dans une infrastructure informatique4.

Le procédé peut être mis en œuvre par un dispositif 1 selon l'invention et plus particulièrement par un dispositif 1 selon les modes de réalisation préférés de l'invention.

Plus généralement, le procédé selon l'invention peut être mis en œuvre par un dispositif d'analyse de comportement comportant un module 10 de mémorisation, un module 20 de raréfaction de ressources, un module 30 d'injection, un module 40 de collecte de métriques, un module 50 de détection de défaillance, et un module 60 de gestion de performance applicative.

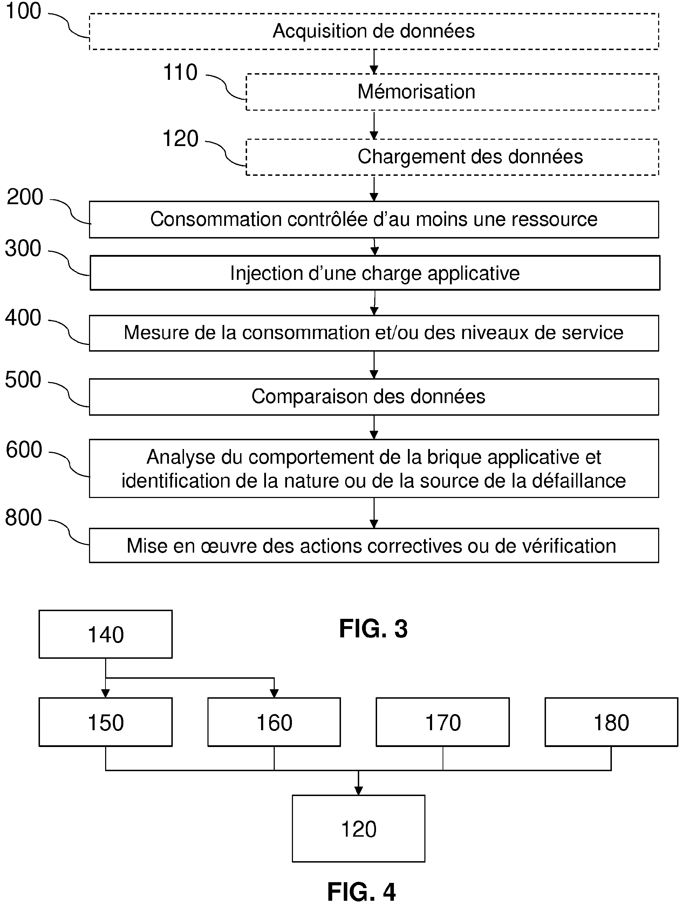

Comme cela est présenté à la **figure 3****,** le procédé selon l'invention peut comporter **une étape d'acquisition 100 de données.** Cette étape d'acquisition 100 correspond par exemple au chargement 120 des paramètres et règles de fonctionnement permettant la mise en œuvre du procédé. Cette étape peut être réalisée juste avant les étapes suivantes du procédé. Cette étape d'acquisition 100 de données comporte plus particulièrement le chargement 120 de données, de préférence mémorisées sur un module 10 de mémorisation selon l'invention, incluant des données d'identification de ressources critiques utilisées par la brique applicative, des données correspondant à des seuils prédéterminés de paramètre de qualité de service, au-delà desquels la brique applicative est considérée en défaillance, des règles de consommation des ressources critiques pour une raréfaction progressive des ressources critiques et un plan de charge prédéterminé représentatif du fonctionnement de la brique applicative.

Le procédé selon l'invention peut également comporter une étape préalable 110 de mémorisation correspondant à l'enregistrement des paramètres et règles de fonctionnement permettant la mise en œuvre du procédé. Cette étape peut être réalisée juste avant les étapes suivantes du procédé ou bien être réalisée bien avant.

En outre, la **figure 4** illustre des étapes de préparation du dispositif et/ou d'initiations du procédé selon l'invention. Au préalable, le procédé selon l'invention peut comporter la réception 140 de données de sondes 41. Ces données peuvent être traitées de façon à définir 150 la charge applicative de façon à établir un plan de charge comportant des données relatives au niveau d'utilisation de ressources par ladite brique applicative, en fonction du temps. Les données de sondes 41 peuvent aussi être traitées de façon à identifier 160 les ressources critiques. En parallèle, ou successivement, le procédé peut comprendre le choix 170 de la brique applicative à étudier par exemple par l'intermédiaire d'une interface ainsi que la définition 180 des règles de consommation permettant une raréfaction progressive. Une fois ces données définies ou acquises, elles peuvent être chargées 120 par le dispositif 1.

Comme illustré à la figure 3, le procédé selon l'invention comporte une **étape de génération 200 d'une consommation contrôlée d'au moins une ressource critique** selon les règles de consommation préalablement mémorisées, par exemple sur un référentiel 13 de raréfaction. Cette étape de génération 200 de consommation contrôlée peut par exemple être réalisée par un module 20 de raréfaction de ressources.

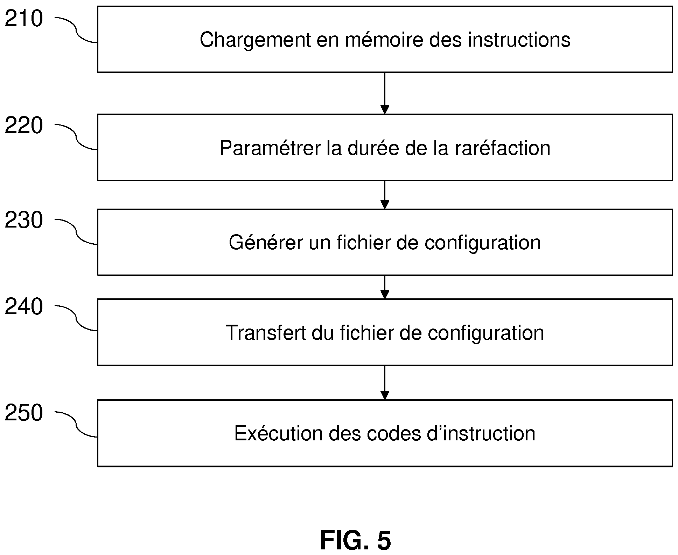

**La** **figure 5** présente une illustration détaillée des sous-étapes pouvant être mises en œuvre lors de la génération 200 de la consommation contrôlée d'au moins une ressource critique. Cette consommation contrôlée peut débuter par le chargement 210 en mémoire des instructions comprises dans un référentiel 13 de raréfaction et détaillant le type de raréfaction à mettre en œuvre. A cette étape, un utilisateur peut *via* un client utilisateur 5 paramétrer 220 la durée de la raréfaction, par exemple, en modifiant les codes instructions de la raréfaction en fonction de la durée souhaitée de la raréfaction. Une fois les éventuels paramétrages réalisés, le module 20 de raréfaction intègre les données de raréfaction et les paramétrages de façon à générer 230 un fichier de configuration de raréfaction de ressources comportant les codes d'instructions capables de générer la raréfaction souhaitée. Ensuite, il identifie le ou les dispositif(s) ou structures informatiques 3 devant subir la raréfaction et leur transfère 240 le fichier de configuration de raréfaction de ressources. Enfin, il peut initier 250 l'exécution des codes d'instruction sur lesdits dispositifs

Ainsi, la raréfaction peut être déployée depuis le dispositif d'analyse de comportement sur des infrastructure informatiques puis exécutée par ces structures informatiques 3 selon une planification gérer par les structures informatiques 3.

Comme illustré à la figure 3, le procédé selon l'invention comporte également une **étape de soumission 300 de l'infrastructure informatique 4 à une charge applicative,** ladite charge applicative étant représentative du fonctionnement de la brique applicative 2. Cette étape de génération 300 d'une charge applicative peut par exemple être réalisée par un module 30 d'injection.

Comme déjà abordé, cette charge applicative qui est injectée sur l'infrastructure informatique 4 correspond de préférence à la charge nominale de la brique applicative lorsque la chaine applicative concernée fonctionne en mode nominal. Ainsi, lors de cette étape, l'infrastructure informatique 4 sera soumise à une charge correspondant à la charge applicative nominale de la brique applicative 2 selon un plan de charge prédéterminé mémorisé sur le référentiel 14 de charge applicative.

Le procédé selon l'invention comporte également une **étape de mesure 400 de la consommation des ressources** de l'infrastructure informatique 4 et/ou de niveaux de service de la brique applicative 2. Cette étape de mesure 400 de la consommation des ressources peut par exemple être réalisée par un module 40 de collecte de métriques.

Comme cela a été mentionné, l'étape de mesure 400 peut être réalisée par l'intermédiaire de sondes informatiques. Avantageusement, le mécanisme de sondes informatiques est démarré avant la raréfaction des ressources et la mise en œuvre du plan de charge. Cela permet d'une part d'identifier rapidement des dégradations des performances ou niveaux de services (telles que les temps de réponse) au-delà d'une limite prédéterminée et d'identifier des ressources ayant une valeur d'utilisation supérieur à un seuil prédéterminé maximum d'utilisation et donc que la ressource est à risque de défaillance.

Le procédé peut aussi comprendre une étape de mémorisation des valeurs mesurées d'utilisation des ressources lors de l'exécution de l'ensemble des requêtes.

Le procédé selon l'invention comporte également une **étape de comparaison 500des seuils prédéterminés de paramètre de qualité de service aux valeurs mesurées de niveaux de service de la brique applicative.** En outre, en présence d'un dépassement, le procédé peut interrompre la consommation contrôlée. Cette étape de comparaison 500 peut par exemple être réalisée par un module 50 de détection de défaillance.

Les valeurs mesurées de paramètre de qualité de service sont en adéquation avec les valeurs seuil de paramètre de qualité de service lorsqu'elles n'ont pas franchi les seuils prédéterminés. Par exemple, lorsque le temps de réponse d'une requête est resté inférieur au seuil prédéterminé de paramètre de qualité de service pour le temps de réponse à cette requête.

Le procédé peut aussi comprendre une étape de mémorisation des valeurs mesurées d'utilisation des ressources lors de l'exécution de l'ensemble des requêtes.

Le procédé selon l'invention comporte également, en présence d'un dépassement, une **étape d'analyse 600 du comportement de la brique applicative 2 et d'identification de la nature et/ou de la source de la défaillance.** Cette étape d'analyse 600 peut par exemple être réalisée par un module 60 de gestion de performance applicative. Cette analyse peut par exemple consister à déterminer si différentes hypothèses ont été prouvées, à détecter des anomalies ou à estimer un impact sur les utilisateurs.

Cette étape d'analyse peut notamment comporter un traitement des fichiers de log de la brique applicative et/ou de données générées par des collecteurs de traces tels que Profiling^{®}, J profiler^{®} ou Dynatrace^{®}.

Le procédé selon l'invention peut avantageusement comporter une étape d'amélioration de la résilience comportant l'identification des actions correctives correspondant aux natures des défaillances identifiées. Cette étape peut par exemple être réalisée par un module 70 d'amélioration de la résilience. En outre, le procédé selon l'invention peut comporter une étape de mise en œuvre 800 des actions correctives ou de vérification leur mise en œuvre.

Par exemple, le procédé selon l'invention peut comporter une étape de modification du niveau d'une ressource de l'infrastructure informatique avant une réexécution des étapes du procédé. En effet, lorsque le procédé permet d'identifier une action corrective consistant à augmenter un niveau de ressource critique, le procédé comporte une étape permettant de mettre en œuvre de façon automatisée, par exemple *via* un script, ladite modification ou l'optimisation puis de ré-exécuter la raréfaction de ressources et la charge applicative de façon à déterminer si la résilience de la brique applicative a été effectivement améliorée suite à la modification des ressources. Le niveau de ressource qui pourra être modifié peut par exemple être sélectionné parmi : le nombre de CPU alloués, la quantité de mémoire disponible et le nombre de ports pouvant être ouverts simultanément. Une telle étape peut par exemple être mise en œuvre par un module 80 d'évolution d'infrastructure.

De façon préférée, le niveau d'une seule ressource est modifié à ce stade. En effet, la modification d'une seule ressource à la fois permet de mieux identifier les conséquences de cette modification sur la qualité de service de la brique applicative ainsi que sur l'utilisation des ressources. Idéalement, une seule ressource est modifiée à la fois et cette ressource est modifiée de façon itérative jusqu'à ce que la résilience de la brique applicative vis-à-vis d'une raréfaction de cette ressource atteigne le niveau attendu.

La modification du niveau de la ressource peut se faire selon le pas de la ressource. Dans ce cas, le niveau de ladite ressource est modifié en soustrayant ou ajoutant au moins un pas de cette ressource à sa valeur actuelle de niveau de ressource. L'ampleur de la modification du niveau d'une ressource est alors égale à un ou plusieurs pas de ladite ressource.

Le niveau de certaines ressources pourra être modifié automatiquement dans le cadre du procédé de l'invention sans une intervention extérieure. En effet, certaines ressources pourront être modifiées par l'intermédiaire de scripts exécutés sur l'infrastructure informatique 4 et aptes à donner l'accès à de nouvelles ressources. Néanmoins, toutes les ressources ne pourront pas être ainsi modifiées par une action logicielle et certaines ressources nécessiteront l'intervention d'un opérateur capable de modifier physiquement l'infrastructure informatique de façon à augmenter le niveau de la ressource.

Ainsi, le procédé selon l'invention peut comporter une étape de détermination d'un mode de modification de la ressource. Pour cela, chaque ressource peut être associée à une information concernant la méthode de modification de ladite ressource. Pour chacune des ressources, le procédé peut faire appel à un fichier comportant des métadonnées permettant de savoir par exemple si la ressource est modifiable, quels sont les scripts à appeler pour modifier la ressource, et si ladite ressource nécessitera un redémarrage de la machine ou bien si la modification à chaud est possible. Les ressources pouvant être facilement modifiées, par exemple par l'intermédiaire de script dédié, sont typiquement : configuration CPU d'une machine, configuration mémoire d'une machine et nombre de ports pouvant être ouverts simultanément.

Alternativement, le procédé selon l'invention peut comprendre une étape de génération d'une alerte, ladite alerte comportant un identifiant de la ressource dont le niveau est à modifier et une instruction sur le niveau à atteindre. Lorsque la ressource à modifier nécessite une intervention manuelle pour sa modification, cela permet à un opérateur de modifier manuellement la quantité de ressource disponible pour la brique applicative.

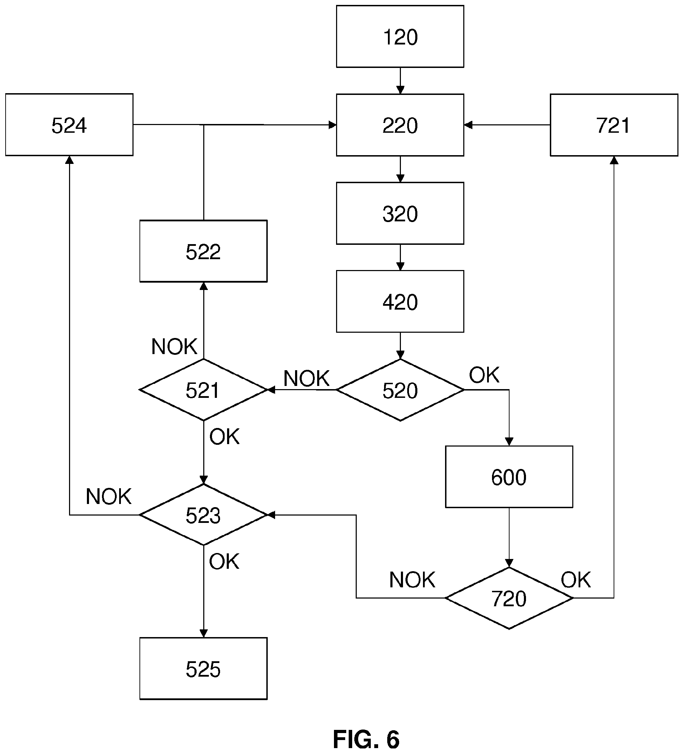

**La** **figure 6** illustre un procédé selon un mode de réalisation de l'invention. Le procédé peut être initié par un chargement 120 de données mémorisées nécessaires à la mise en œuvre du procédé. Cela comporte ici, une étape d'acquisition de la configuration de la raréfaction des ressources d'une part et de la charge applicative d'autre part. Ces données peuvent avoir été préalablement mémorisées dans des référentiels ou bien avoir été transmises par une interface homme machine puis de préférence mémorisées.

Ensuite, il y a consommation contrôlée 200 d'au moins une ressource critique de la brique applicative 2 sur une infrastructure informatique 4 telle qu'une consommation de la mémoire vive disponible et une mise en œuvre 320 de la charge nominale de la brique applicative. Ces deux étapes peuvent être ordonnées indifféremment à condition qu'elles soient exécutées en parallèle (i.e. concomitamment). Elles sont mises en œuvre par l'exécution de commandes dans un langage de script. Ces étapes sont réalisées dans un environnement de test permettant de contrôler au mieux le comportement de la brique applicative.

A partir de données issues de la collecte de métrique 420, le procédé met en œuvre une comparaison 520 de données de façon à identifier une défaillance. En absence de défaillance (NOK), le procédé peut comporter une étape de comparaison 521 de la consommation contrôlée à un seuil maximum de consommation contrôlée de façon à déterminer si la raréfaction peut être augmentée. Si tel est le cas (NOK), la raréfaction est reconfigurée 522 de façon à augmenter la consommation contrôlée puis elle est à nouveau mise en œuvre. Si le seuil maximum de consommation contrôlée a été atteint (OK), alors le procédé peut comporter une étape 523 permettant de déterminer si toutes les ressources critiques ont été testées (i.e. raréfiées). S'il reste des ressources à tester (NOK), alors il comporte une étape de modification 524 de la ressource critique à raréfier tandis que s'il ne reste pas de ressources à tester (OK), alors la résilience est atteinte 525 pour cette brique applicative.

Si une défaillance est identifiée lors de l'étape 520 de comparaison de données (OK), alors le procédé comporte une étape d'analyse 600 de la défaillance puis à partir de données de défaillances générées, le procédé peut comporter une étape 720 de sélection d'au moins une instruction d'action corrective, de préférence par un module 70 d'amélioration de la résilience. Si une action corrective est identifiée (OK) alors le procédé comporte une étape d'application de l'action corrective 721 tandis qu'en absence d'action corrective (NOK), le procédé peut comporter une étape 523 permettant de déterminer si toutes les ressources critiques ont été testées (i.e. raréfiées).

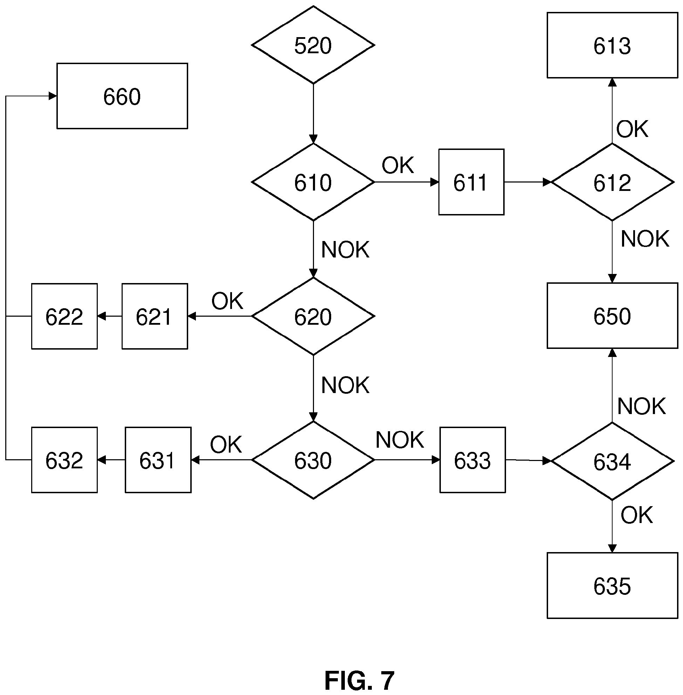

**La** **figure 7** illustre une analyse 600 de la défaillance selon un mode de réalisation de l'invention. Cette analyse peut comporter une première étape d'analyse de l'implication de la conception 610 de la brique applicative dans la défaillance suite à une raréfaction d'une ressource critique. Si lors de cette étape, comportant par exemple une analyse de fichier de collecteur de traces, il est déterminé que la conception de la brique applicative est impliquée (OK) dans la défaillance alors le procédé comporte une étape de génération 611 d'un rapport comportant les données de traces collectées puis une étape de détermination 612 de l'existence ou non d'autres ressources critiques à tester pour cette brique applicative. Si c'est le cas (OK) alors il y a modification 613 de la ressource critique à raréfier et sinon (NOK) alors l'analyse du comportement de cette brique applicative est finalisée et un rapport est généré 650.

S'il est déterminé que la conception de la brique applicative n'est pas impliquée dans la défaillance (NOK) alors le procédé comporte une étape d'analyse de l'implication de la configuration 620 de la brique applicative dans la défaillance. Si lors de cette étape, comportant par exemple une analyse de fichier de collecteur de traces, il est déterminé que la configuration de la brique applicative est impliquée dans la défaillance suite à une raréfaction d'une ressource critique alors le procédé comporte une étape de génération 621 d'un rapport comportant une donnée sur la configuration défaillante de la brique applicative et une étape de modification 622 des fichiers de configuration de la brique applicative. Le procédé comporte alors une réinitialisation 660 de l'analyse avec une brique applicative ayant une configuration modifiée.

S'il est déterminé que la configuration de la brique applicative n'est pas impliquée dans la défaillance (NOK) alors le procédé comporte une étape d'analyse de l'implication des ressources 630 de l'infrastructure informatique 4 dans la défaillance. Si lors de cette étape, comportant par exemple une analyse de fichier de collecteur de traces, il est déterminé qu'une ou plusieurs ressources sont impliquées dans la défaillance suite à une raréfaction d'une ressource critique alors le procédé comporte une étape de génération 631 d'un rapport comportant une donnée sur la ou les ressources défaillantes et une étape de modification 632 des ressources de l'infrastructure informatique. Le procédé comporte alors une réinitialisation 660 de l'analyse avec une brique applicative ayant une configuration modifiée.

S'il est déterminé que les ressources de l'infrastructure informatiques ne sont pas impliquées dans la défaillance (NOK) alors le procédé comporte une étape de génération 633 d'un rapport. Cela peut être suivi d'une étape de détermination 634 de l'existence ou non d'autres ressources critiques à tester pour cette brique applicative. Si c'est le cas (OK) alors il y a modification 635 de la ressource critique à raréfier et sinon (NOK) alors l'analyse du comportement de cette brique applicative est finalisée et un rapport est généré 650.

Une fois d'éventuelles corrections réalisées sur la configuration de la brique applicative ou de l'infrastructure informatique ou encore si des ressources de l'infrastructure informatique ont été modifiées, le procédé d'analyse du comportement est réinitialisé de façon à valider que les adaptations permettent bien désormais à l'application d'être résiliente à la raréfaction de la ressource. Si tel est bien le cas, on peut décider de poursuivre la raréfaction de ladite ressource pour valider la résilience de l'application au-delà du point de rupture trouvé précédemment ou tester la résilience de l'application sur un autre type de ressources.

Ainsi, la présente invention permet d'analyser de façon automatique le comportement d'une brique applicative ainsi que sa résilience à la raréfaction de ressources et si nécessaire de procéder à des modifications permettant d'augmenter ladite résilience. Cela, ainsi que tous ces avantages précédemment décrit contribuent donc à faciliter la gestion d'une infrastructure informatique pour un administrateur SI et à augmenter la résilience des briques applicatives qu'elle supporte sans avoir à systématiquement augmenter les quantités de ressources allouées.

## Revendications

1. Dispositif (1) d'analyse du comportement d'une brique applicative (2) soumise à une raréfaction des ressources dans une infrastructure informatique (4), ledit dispositif comportant :
- Des moyens d'identification des ressources critiques utilisées par la brique applicative, une ressource critique étant une ressource dont l'utilisation dans des conditions nominales est la plus proche de son utilisation limite ou de sa saturation ;
- Un module (10) de mémorisation, configuré pour mémoriser une pluralité de référentiels incluant :
∘ Un référentiel (11) de ressources, configuré pour mémoriser des données d'identification de ressources critiques utilisées par la brique applicative,
∘ Un référentiel (12) de règles d'exécution, configuré pour mémoriser des données correspondant à des seuils prédéterminés de paramètre de qualité de service, au-delà desquels la brique applicative est considérée en défaillance,
∘ Un référentiel (13) de raréfaction, configuré pour mémoriser des règles de consommation des ressources critiques pour une raréfaction progressive des ressources critiques, et
∘ Un référentiel (14) de charge applicative, configuré pour mémoriser un plan de charge prédéterminé représentatif du fonctionnement de la brique applicative ;
- Un module (20) de raréfaction de ressources, configuré pour générer une consommation contrôlée d'au moins une ressource critique identifiée selon les règles de consommation préalablement mémorisées sur le référentiel (13) de raréfaction ;
- Un module d'injection (30), configuré pour soumettre l'infrastructure informatique à une charge applicative représentative du fonctionnement de la brique applicative (2) selon le plan de charge mémorisé sur le référentiel (14) de charge applicative ;
- Un module (40) de collecte de métriques, configuré pour mesurer la consommation des ressources de l'infrastructure informatique (4) et/ou les niveaux de service de la brique applicative (2) ;
- Un module (50) de détection de défaillance, configuré pour comparer les seuils prédéterminés de paramètre de qualité de service aux valeurs mesurées de la consommation des ressources et/ou des niveaux de service de la brique applicative ; et
- Un module (60) de gestion de performance applicative, configuré pour, en présence d'un dépassement des seuils prédéterminés de paramètre de qualité de service, analyser le comportement de la brique applicative et générer des données de défaillances capables d'informer sur la nature et/ou la source de la défaillance.

2. Dispositif d'analyse de comportement selon la revendication 1, **caractérisé en ce que** les données de défaillances générées comportent une donnée sur un niveau de raréfaction de ressources que la brique applicative (2) peut supporter avant de subir une défaillance.

3. Dispositif d'analyse de comportement selon l'une des revendications 1 ou 2, **caractérisé en ce que** le module (60) de gestion de performance applicative est configuré pour sélectionner la nature de la défaillance parmi :
- configuration matérielle de l'infrastructure informatique,
- configuration logicielle de l'infrastructure informatique,
- configuration de la brique applicative, et
- conception de la brique applicative.

4. Dispositif d'analyse de comportement selon l'une quelconque des revendication 1 à 3, **caractérisé en ce qu'**il comporte en outre un référentiel (15) de connaissances configuré pour mémoriser des données prédéterminées de défaillances en fonction de données d'exécution, **en ce que** le module (60) de gestion de performance applicative comporte des collecteurs de traces (61), lesdits collecteurs de traces (61) étant configurés pour collecter des données d'exécution et **en ce que** le module (60) de gestion de performance applicative est configuré pour générer les données de défaillances à partir du référentiel (15) de connaissances en fonction de données d'exécution collectées.

5. Dispositif d'analyse de comportement selon l'une quelconque des revendication 1 à 4, **caractérisé en ce qu'**il comporte en outre un référentiel (16) de règles d'évolution configuré pour mémoriser des actions correctives en fonction de données de défaillance et un module (70) d'amélioration de la résilience configuré pour identifier des actions correctives à partir de données de défaillances générées par le module (60) de gestion de performance applicative.

6. Dispositif d'analyse de comportement selon la revendication 5, **caractérisé en ce que** le référentiel (12) de règles d'exécution est configuré pour mémoriser plusieurs catégories de seuils prédéterminés de paramètre de qualité de service incluant une catégorie dite acceptable, correspondant aux niveaux de services au-delà desquels la brique applicative est considérée comme fournissant un service dégradé mais acceptable et **en ce que** le module (70) d'amélioration de la résilience est configuré pour mettre en œuvre lesdites actions correctives de façon à ce que la brique applicative (2) fournisse des niveaux de service correspondant à la catégorie dite acceptable malgré une raréfaction de ressources.

7. Dispositif d'analyse de comportement selon l'une des revendications 5 ou 6, **caractérisé en ce que** le module (70) d'amélioration de la résilience est configuré pour mettre en œuvre lesdites actions correctives ou à vérifier leur mise en œuvre pour permettre à l'application d'être résiliente à une raréfaction de ressources.

8. Dispositif d'analyse de comportement selon l'une quelconque des revendication 1 à 7, **caractérisé en ce qu'**il comporte en outre un référentiel (17) de ressources accessibles configuré pour mémoriser des données caractéristiques de ressources accessibles et un module (80) d'évolution d'infrastructure configuré pour générer au moins un plan d'évolution listant des modifications de ressources à effectuer dans l'infrastructure informatique (4) à partir des données caractéristiques de ressources accessibles et des données de défaillances.

9. Dispositif d'analyse de comportement selon l'une quelconque des revendications 1 à 8, **caractérisé en ce que** les règles de consommation des ressources critiques comportent au moins les données suivantes :
- un niveau de consommation de ressource de départ,
- un niveau final de consommation de ressource,
- un pas d'augmentation de la consommation, et
- une durée entre chaque pas d'augmentation.

10. Procédé d'analyse du comportement d'une brique applicative soumise à une raréfaction des ressources dans une infrastructure informatique, ledit procédé étant mis en œuvre par un dispositif de d'analyse de comportement comportant un module (10) de mémorisation, un module (20) de raréfaction de ressources, un module (30) d'injection, un module (40) de collecte de métriques, un module (50) de détection de défaillance, et un module (60) de gestion de performance applicative, ledit procédé comportant les étapes suivantes :
- Identifier (160) des ressources critiques, une ressource critique étant une ressource dont l'utilisation dans des conditions nominales est la plus proche de son utilisation limite ou de sa saturation ;
- Générer (200) sur une infrastructure informatique, par l'intermédiaire du module (20) de raréfaction de ressources, une consommation contrôlée d'au moins une ressource critique identifiée selon les règles de consommation préalablement mémorisées ;
- Soumettre (300) l'infrastructure informatique, par l'intermédiaire du module (30) d'injection, à une charge applicative représentative du fonctionnement de la brique applicative (2) selon un plan de charge par exemple mémorisé sur un référentiel (14) de charge applicative ;
- Mesurer (400), par l'intermédiaire du module (40) de collecte de métriques, de la consommation des ressources de l'infrastructure informatique (4) et/ou de niveaux de service de la brique applicative (2) ;
- Comparer (500), par l'intermédiaire du module (50) de détection de défaillance, des seuils prédéterminés de paramètre de qualité de service aux valeurs mesurées de niveaux de service de la brique applicative (2) de façon à identifier un dépassement ; et
- En présence d'un dépassement des seuils prédéterminés de paramètre de qualité de service, analyser (600) le comportement de la brique applicative (2) et générer, par l'intermédiaire du module (60) de gestion de performance applicative, des données de défaillances capables d'informer sur la nature et/ou la source de la défaillance.

11. Procédé d'analyse du comportement d'une brique applicative selon la revendication 10, **caractérisé en ce qu'**il comporte en outre une étape de sélection (720) d'au moins une instruction d'action corrective si une défaillance est identifiée et une étape d'application de l'action corrective identifiée (721).

12. Procédé d'analyse du comportement d'une brique applicative selon l'une des revendications 10 ou 11, **caractérisé en ce que**, lorsqu'il est déterminé que la conception de la brique applicative est impliquée dans la défaillance, le procédé comporte une étape de génération (611) d'un rapport comportant des données de traces collectées puis une étape de détermination (612) de l'existence ou non d'autres ressources critiques à tester pour cette brique applicative.

13. Procédé d'analyse du comportement d'une brique applicative selon la revendication 12, **caractérisé en ce que**, lorsqu'il y a détermination de l'existence d'autres ressources critiques à tester pour cette brique applicative, alors le procédé comporte en outre une modification (613) de la ressource critique à raréfier et sinon l'analyse du comportement de cette brique applicative est finalisée et un rapport est généré (650).

14. Procédé d'analyse du comportement d'une brique applicative selon l'une quelconque des revendications 10 à 13, **caractérisé en ce que**, lorsqu'il est déterminé que la configuration (620) de la brique applicative est impliquée dans la défaillance, alors le procédé comporte une étape de génération (621) d'un rapport comportant une donnée sur la configuration défaillante de la brique applicative et une étape de modification (622) de fichiers de configuration de la brique applicative.

15. Procédé d'analyse du comportement d'une brique applicative selon l'une quelconque des revendications 10 à 14, **caractérisé en ce que**, lorsqu'il est déterminé qu'une ou plusieurs ressources sont impliquées dans la défaillance suite à une raréfaction d'une ressource critique, alors le procédé comporte une étape de génération (631) d'un rapport comportant une donnée sur la ou les ressources défaillantes et une étape de modification (632) des ressources de l'infrastructure informatique.

## Patentansprüche

1. Vorrichtung (1) zum Analysieren des Verhaltens eines Anwendungsbausteins (2), der einer Ressourcenverknappung in einer IT-Infrastruktur (4) ausgesetzt ist, die Vorrichtung umfassend:
- Mittel zum Identifizieren der kritischen Ressourcen, die durch den Anwendungsbaustein genutzt werden, wobei eine kritische Ressource eine Ressource ist, deren Nutzung unter Nennbedingungen ihrer Grenznutzung oder ihrer Sättigung am nächsten kommt;
- ein Speichermodul (10), das zum Speichern einer Vielzahl von Repositorys konfiguriert ist, einschließlich:
o eines Ressourcen-Repositorys (11), das zum Speichern von Daten zum Identifizieren von kritischen Ressourcen konfiguriert ist, die durch den Anwendungsbaustein genutzt werden,
o eines Ausführungsregel-Repositorys (12), das zum Speichern von Daten konfiguriert ist, die zuvor bestimmten Schwellenwerten für Dienstgüteparameter entsprechen, jenseits derer der Anwendungsbaustein als ausgefallen gilt,
o eines Verknappungs-Repositorys (13), das zum Speichern der Verbrauchsregeln von kritischen Ressourcen für eine fortschreitende Verknappung der kritischen Ressourcen konfiguriert ist, und
o eines Anwendungsbelastungs-Repositorys (14), das zum Speichern eines zuvor bestimmten Belastungsplans konfiguriert ist, der den Betrieb des Anwendungsbausteins darstellt;
- eines Ressourcenverknappungsmoduls (20), das zum Erzeugen eines kontrollierten Verbrauchs mindestens einer kritischen Ressource konfiguriert ist, die gemäß den Verbrauchsregeln identifiziert wird, die vorab in dem Verknappungs-Repository (13) gespeichert wurden;
- ein Injektionsmodul (30), das zum Aussetzen der IT-Infrastruktur einer Anwendungsbelastung konfiguriert ist, die den Betrieb des Anwendungsbausteins (2) gemäß dem Belastungsplan darstellt, der in dem Anwendungsbelastungs-Repository (14) gespeichert ist;
- ein Metrikerfassungsmodul (40), das zum Messen des Ressourcenverbrauchs der IT-Infrastruktur (4) und/oder der Dienststufen des Anwendungsbausteins (2) konfiguriert ist;
- ein Ausfallerkennungsmodul (50), das zum Vergleichen der zuvor bestimmten Schwellenwerte für Dienstgüteparameter mit den gemessenen Werten des Ressourcenverbrauchs und/oder der Dienststufen des Anwendungsbausteins konfiguriert ist; und
- ein Anwendungsleistungsverwaltungsmodul (60), das zum Analysieren, angesichts einer Überschreitung der zuvor bestimmten Schwellenwerte für Dienstgüteparameter, des Verhaltens des Anwendungsbausteins und Erzeugen von Ausfalldaten konfiguriert ist, die in der Lage sind, über die Art und/oder den Ursprung des Ausfalls zu informieren.

2. Verhaltensanalysevorrichtung nach Anspruch 1,
**dadurch gekennzeichnet, dass** die erzeugten Ausfalldaten ein Datenelement über eine Ressourcenverknappungsstufe umfassen, der der Anwendungsbaustein (2) standhalten kann, bevor er einen Ausfall erfährt.

3. Verhaltensanalysevorrichtung nach einem der Ansprüche 1 oder 2,
**dadurch gekennzeichnet, dass** das Anwendungsleistungsverwaltungsmodul (60) zum Auswählen der Art des Ausfalls konfiguriert ist aus:
- einer Hardwarekonfiguration der IT-Infrastruktur,
- einer Softwarekonfiguration der IT-Infrastruktur,
- einer Konfiguration des Anwendungsbausteins, und
- einem Design des Anwendungsbausteins.

4. Verhaltensanalysevorrichtung nach einem der Ansprüche 1 bis 3,
**dadurch gekennzeichnet, dass** es ferner ein Wissens-Repository (15) umfasst, das zum Speichern zuvor bestimmter Ausfalldaten in Abhängigkeit von Ausführungsdaten konfiguriert ist, dass das Anwendungsleistungsverwaltungsmodul (60) Spurenerfasser (61) umfasst, wobei die Spurenerfasser (61) zum Erfassen von Ausführungsdaten konfiguriert sind, und dass das Anwendungsleistungsverwaltungsmodul (60) zum Erzeugen der Ausfalldaten aus dem Wissens-Repository (15) in Abhängigkeit von erfassten Ausführungsdaten konfiguriert ist.

5. Verhaltensanalysevorrichtung nach einem der Ansprüche 1 bis 4,
**dadurch gekennzeichnet, dass** es ferner ein Entwicklungsregel-Repository (16), das zum Speichern von Korrekturmaßnahmen in Abhängigkeit von Ausfalldaten konfiguriert ist, und ein Belastbarkeitsverbesserungsmodul (70) umfasst, das zum Identifizieren von Korrekturmaßnahmen aus Ausfalldaten konfiguriert ist, die durch das Anwendungsleistungsverwaltungsmodul (60) erzeugt werden.

6. Verhaltensanalysevorrichtung nach Anspruch 5,
**dadurch gekennzeichnet, dass** das Ausführungsregel-Repository (12) zum Speichern mehrerer Kategorien von zuvor bestimmten Schwellenwerten für Dienstgüteparameter konfiguriert ist, einschließlich einer sogenannten akzeptablen Kategorie, die den Dienststufen entspricht, jenseits derer der Anwendungsbaustein als einen verschlechterten, aber akzeptablen Dienst bereitstellend gilt, und dass das Belastbarkeitsverbesserungsmodul (70) zum Implementieren der Korrekturmaßnahmen so konfiguriert ist, dass der Anwendungsbaustein (2) trotz einer Ressourcenverknappung Dienststufen bereitstellt, die der sogenannten akzeptablen Kategorie entsprechen.

7. Verhaltensanalysevorrichtung nach einem der Ansprüche 5 oder 6,
**dadurch gekennzeichnet, dass** das Belastbarkeitsverbesserungsmodul (70) zum Implementieren der Korrekturmaßnahmen oder Verifizieren deren Implementierung zum Ermöglichen, dass die Anwendung in Hinblick auf eine Ressourcenverknappung belastbar gemacht wird, konfiguriert ist.

8. Verhaltensanalysevorrichtung nach einem der Ansprüche 1 bis 7,
**dadurch gekennzeichnet, dass** es ferner ein Repository (17) für zugängliche Ressourcen, das zum Speichern charakteristischer Daten von zugänglichen Ressourcen konfiguriert ist, und ein Infrastrukturentwicklungsmodul (80) umfasst, das zum Erzeugen mindestens eines Entwicklungsplans, der die Ressourcenänderungen auflistet, die in der IT-Infrastruktur (4) durchgeführt werden sollen, aus kennzeichnenden Daten der zugänglichen Ressourcen und Ausfalldaten konfiguriert ist.

9. Verhaltensanalysevorrichtung nach einem der Ansprüche 1 bis 8,
**dadurch gekennzeichnet, dass** die Verbrauchsregeln der kritischen Ressourcen mindestens die folgenden Daten umfassen:
- eine Stufe des anfänglichen Ressourcenverbrauchs,
- eine endgültige Stufe des Ressourcenverbrauchs,
- einen Anstiegsschritt des Verbrauchs, und
- eine Dauer zwischen jedem Anstiegsschritt.

10. Verfahren zum Analysieren des Verhaltens eines Anwendungsbausteins, der einer Ressourcenverknappung in einer IT-Infrastruktur ausgesetzt ist, wobei das Verfahren durch eine Verhaltensanalysevorrichtung implementiert wird, umfassend ein Speichermodul (10), ein Ressourcenverknappungsmodul (20), ein Injektionsmodul (30), ein Metrikerfassungsmodul (40), ein Ausfallerkennungsmodul (50) und ein Anwendungsleistungsverwaltungsmodul (60), das Verfahren umfassend die folgenden Schritte:
- Identifizieren (160) der kritischen Ressourcen, wobei eine kritische Ressource eine Ressource ist, deren Nutzung unter Nennbedingungen ihrer Grenznutzung oder ihrer Sättigung am nächsten kommt;
- Erzeugen (200) auf einer IT-Infrastruktur, über das Ressourcenknappheitsmodul (20), eines kontrollierten Verbrauchs von mindestens einer kritischen Ressource, die gemäß den vorab gespeicherten Verbrauchsregeln identifiziert wird;
- Aussetzen (300) der IT-Infrastruktur, über das Injektionsmodul (30), einer Anwendungsbelastung, die den Betrieb des Anwendungsbausteins (2) gemäß einem Belastungsplan darstellt, der beispielsweise in einem Anwendungsbelastungs-Repository (14) gespeichert ist;
- Messen (400), über das Metrikerfassungsmodul (40), des Verbrauchs der IT-Infrastrukturressourcen (4) und/oder der Dienststufen des Anwendungsbausteins (2);
- Vergleichen (500), über das Ausfallerkennungsmodul (50), zuvor bestimmter Schwellenwerte für Dienstgüteparameter mit den gemessenen Werten von Dienststufen des Anwendungsbausteins (2), um eine Überschreitung zu identifizieren; und
- angesichts einer Überschreitung der zuvor bestimmten Schwellenwerte für Dienstgüteparameter, Analysieren (600) des Verhaltens des Anwendungsbausteins (2) und Erzeugen, über das Anwendungsleistungsverwaltungsmodul (60), von Ausfalldaten, die in der Lage sind, über die Art und/oder den Ursprung des Ausfalls zu informieren.

11. Verfahren zum Analysieren des Verhaltens eines Anwendungsbausteins nach Anspruch 10, **dadurch gekennzeichnet, dass** es ferner einen Schritt zum Auswählen (720) mindestens einer Korrekturmaßnahmeanweisung, falls ein Ausfall identifiziert wird, und einen Schritt zum Anwenden der identifizierten Korrekturmaßnahme (721) umfasst.

12. Verfahren zum Analysieren des Verhaltens eines Anwendungsbausteins nach einem der Ansprüche 10 oder 11, **dadurch gekennzeichnet, dass**, wenn bestimmt wird, dass das Design des Anwendungsbausteins an dem Ausfall beteiligt ist, das Verfahren einen Schritt zum Erzeugen (611) eines Berichts, umfassend erfasste Spurendaten, danach einen Schritt zum Bestimmen (612) des Vorhandenseins oder Nichtvorhandenseins anderer kritischer Ressourcen umfasst, die für diesen Anwendungsbaustein getestet werden sollen.

13. Verfahren zum Analysieren des Verhaltens eines Anwendungsbausteins nach Anspruch 12, **dadurch gekennzeichnet, dass**, wenn die Bestimmung des Vorhandenseins anderer kritischer Ressourcen vorliegt, die für diesen Anwendungsbaustein getestet werden sollen, dann das Verfahren ferner eine Modifikation (613) der kritischen Ressource umfasst, die verknappt werden soll, und andernfalls die Analyse des Verhaltens dieses Anwendungsbausteins abgeschlossen und ein Bericht erzeugt wird (650).

14. Verfahren zum Analysieren des Verhaltens eines Anwendungsbausteins nach einem der Ansprüche 10 bis 13, **dadurch gekennzeichnet, dass**, wenn bestimmt wird, dass die Konfiguration (620) des Anwendungsbausteins an dem Ausfall beteiligt ist, dann das Verfahren einen Schritt zum Erzeugen (621) eines Berichts, umfassend ein Datenelement über die ausgefallene Konfiguration des Anwendungsbausteins, und einen Schritt zum Modifizieren (622) der Konfigurationsdateien des Anwendungsbausteins umfasst.

15. Verfahren zum Analysieren des Verhaltens eines Anwendungsbausteins nach einem der Ansprüche 10 bis 14, **dadurch gekennzeichnet, dass**, wenn nach einer Verknappung einer kritischen Ressource bestimmt wird, dass eine oder mehrere Ressourcen an dem Ausfall beteiligt sind, dann das Verfahren einen Schritt zum Erzeugen (631) eines Berichts, umfassend ein Datenelement über die ausgefallene(n) Ressource(n), und einen Schritt zum Modifizieren (632) der Ressourcen der IT-Infrastruktur umfasst.

## Claims

1. Device (1) for analyzing the behavior of an application component (2) subjected to an increasing scarcity of resources in a computing infrastructure (4), said device comprising:
- means for identifying critical resources used by the application component, a critical resource being a resource of which the use under nominal conditions is closest to the limit use or the saturation thereof;
- a storage module (10), configured to store a plurality of repositories including:
∘ a resource repository (11), configured to store data for identifying critical resources used by the application component,
∘ an execution rules repository (12), configured to store data corresponding to predetermined quality-of-service parameter thresholds, beyond which the application component is considered to have failed,
∘ an increasing scarcity repository (13), configured to store critical resource consumption rules for progressive scarcity of critical resources, and
∘ an application load repository (14), configured to store a predetermined load plan representative of the operation of the application component;
- an increasing resource scarcity module (20), configured to generate a controlled consumption of at least one identified critical resource according to the consumption rules previously stored in the increasing scarcity repository (13);
- an injection module (30), configured to subject the computing infrastructure to an application load representative of the operation of the application component (2) according to the load plan stored in the application load repository (14);
- a metrics collection module (40), configured to measure the consumption of resources of the computing infrastructure (4) and/or the service levels of the application component (2);
- a failure detection module (50), configured to compare the predetermined quality-of-service parameter thresholds with the measured values of the resource consumption and/or service levels of the application component; and
- an application performance management module (60), configured to, when predetermined quality-of-service parameter thresholds are exceeded, analyze the behavior of the application component and generate failure data capable of providing information on the nature and/or source of the failure.

2. Behavior analysis device according to claim 1, **characterized in that** the failure data generated includes a piece of data on a level of increasing resource scarcity that the application component (2) can withstand before suffering a failure.

3. Behavior analysis device according to either claim 1 or claim 2,
**characterized in that** the application performance management module (60) is configured to select the nature of the failure from:
- hardware configuration of the computing infrastructure,
- software configuration of the computing infrastructure,
- configuration of the application component, and
- design of the application component.

4. Behavior analysis device according to any of claims 1 to 3,
**characterized in that** it further comprises a knowledge repository (15) configured to store predetermined failure data based on execution data, **in that** the application performance management module (60) comprises trace collectors (61), said trace collectors (61) being configured to collect execution data, and **in that** the application performance management module (60) is configured to generate the failure data from the knowledge repository (15) based on collected execution data.

5. Behavior analysis device according to any of claims 1 to 4,
**characterized in that** it further comprises a development rules repository (16) configured to store corrective actions based on failure data, and a resilience improvement module (70) configured to identify corrective actions from failure data generated by the application performance management module (60).

6. Behavior analysis device according to claim 5, **characterized in that** the execution rules repository (12) is configured to store a plurality of categories of predetermined quality-of-service parameter thresholds, including a so-called acceptable category, corresponding to the service levels beyond which the application component is considered to provide a degraded but acceptable service, and **in that** the resilience improvement module (70) is configured to implement said corrective actions so that the application component (2) provides service levels corresponding to the so-called acceptable category despite an increasing scarcity of resources.

7. Behavior analysis device according to either claim 5 or claim 6,
**characterized in that** the resilience improvement module (70) is configured to implement said corrective actions or to verify the implementation thereof in order to enable the application to be resilient to increasing resource scarcity.

8. Behavior analysis device according to any of claims 1 to 7,
**characterized in that** it further comprises an accessible resource repository (17) configured to store accessible resource characteristic data, and an infrastructure development module (80) configured to generate at least one development plan listing resource modifications to be carried out in the computing infrastructure (4) from accessible resource characteristic data and failure data.

9. Behavior analysis device according to any of claims 1 to 8,
**characterized in that** the critical resource consumption rules comprise at least the following data:
- an initial level of resource consumption,
- a final level of resource consumption,
- an increase step in consumption, and
- a time between each increase step.

10. Method for analyzing the behavior of an application component subjected to an increasing scarcity of resources in a computing infrastructure, said method being implemented by a behavior analysis device comprising a storage module (10), an increasing resource scarcity module (20), an injection module (30), a metrics collection module (40), a failure detection module (50), and an application performance management module (60), said method comprising the following steps:
- identifying (160) critical resources, a critical resource being a resource of which the use under nominal conditions is closest to the limit use or the saturation thereof;
- generating (200) on a computing infrastructure, via the increasing resource scarcity module (20), a controlled consumption of at least one identified critical resource according to the previously stored consumption rules;
- subjecting (300) the computing infrastructure, via the injection module (30), to an application load representative of the operation of the application component (2) according to a load plan stored, for example, in an application load repository (14);
- measuring (400), via the metrics collection module (40), the consumption of resources of the computing infrastructure (4) and/or the service levels of the application component (2);
- comparing (500), via the failure detection module (50), predetermined quality-of-service parameter thresholds with the measured service level values of the application component (2) in order to identify when these thresholds are exceeded; and
- when predetermined quality-of-service parameter thresholds are exceeded, analyzing (600) the behavior of the application component (2) and generating, via the application performance management module (60), failure data capable of providing information on the nature and/or source of the failure.

11. Method for analyzing the behavior of an application
component according to claim 10, **characterized in that** it further comprises a step of selecting (720) at least one corrective action instruction if a failure is identified, and a step of applying the identified corrective action (721).

12. Method for analyzing the behavior of an application
component according to either claim 10 or claim 11, **characterized in that**, if it is determined that the design of the application component is involved in the failure, the method comprises a step of generating (611) a report comprising collected trace data and then a step of determining (612) whether or not there are other critical resources to be tested for this application component.

13. Method for analyzing the behavior of an application
component according to claim 12, **characterized in that**, if it is determined that there are other critical resources to be tested for this application component, then the method further comprises the modification (613) of the critical resource to be made increasingly scarce and otherwise the analysis of the behavior of this application component is finalized and a report is generated (650).

14. Method for analyzing the behavior of an application
component according to any of claims 10 to 13, **characterized in that**, if it is determined that the configuration (620) of the application component is involved in the failure, then the method comprises a step of generating (621) a report comprising a piece of data on the failed configuration of the application component and a step of modifying (622) configuration files of the application component.

15. Method for analyzing the behavior of an application
component according to any of claims 10 to 14, **characterized in that**, if it is determined that one or more resources are involved in the failure as a result of an increasing scarcity of a critical resource, then the method comprises a step of generating (631) a report comprising a piece of data on the failing resource(s) and a step of modifying (632) the resources of the computing infrastructure.
